# EUROPÄISCHE PATENTSCHRIFT

(11) **EP 1 763 532 B1**
(45) Veröffentlichungstag und Bekanntmachung des Hinweises auf die Patenterteilung: **10.10.2007**
(21) Anmeldenummer: 05773938.5
(22) Anmeldetag: 04.07.2005
(51) Int. Cl.: C07F 15/02

(54) **1,1'DIPHOSPHINOFERROCENE MIT 2,2'-GEBUNDENEN ACHIRALEN ODER CHIRALEN RESTEN**
1,1'-DIPHOSPHINOFERROCENES HAVING 2,2'-BOUND ACHIRALS OR CHIRAL RADICALS
1,1' DIPHOSPHINOFERROCENE AVEC DES RESTES ACHIRAUX OU CHIRAUX LIES EN 2,2'

(30) Priorität: 05.07.2004 CH 112604; 26.10.2004 CH 177304; 10.11.2004 CH 185304
(43) Veröffentlichungstag der Anmeldung: 21.03.2007
(73) Patentinhaber: Solvias AG, 4057 Basel (CH)
(72) Erfinder: PUGIN, Benoît, CH-4142 Münchenstein (CH); FENG, Xiang Dong, Qingdao 266071 (CN); SPINDLER, Felix, CH-4656 Starrkirch-Wil (CH)
(74) Vertreter: Maué, Paul Georg
(86) Internationale Anmeldenummer: PCT/EP2005/053171
(87) Internationale Veröffentlichungsnummer: WO 2006/003196

(56) Entgegenhaltungen:
- DE-A1- 19 921 924

## Beschreibung

Die vorliegende Erfindung betrifft 2,2'-Diphosphino-ferrocene, die in den 1,1'-Stellungen einen Rest mit einem chiralen α-C-Atom, oder einen über eine CH₂-Gruppe gebundenen achiralen oder chiralen Rest gebunden haben, und die wenigstens einen weiteren Substituenten in den Cyclopentadienylringen enthalten; Verfahren zu deren Herstellung; Metallkomplexe der Übergangsmetalle mit diesen Diphosphinen als Liganden; und die Verwendung der Metallkomplexe als homogene Katalysatoren in gegebenenfalls asymmetrischen Anlagerungsreaktionen sowie ein Verfahren zur bevorzugt asymmetrischen Hydrierung von prochiralen ungesättigten organischen Verbindungen.

Chirale Diphosphine haben sich als wertvolle Liganden in Übergangsmetallkomplexen erwiesen, die als homogene Katalysatoren für asymmetrische Anlagerungsreaktionen und besonders Hydrierungen verwendet werden. Chirale Liganden vom Diphosphintyp sind in grosser Vielzahl bekannt. Es ist noch immer ein ungelöstes Problem auf dem Gebiet dieser stereoselektiven Katalyse, dass man nicht voraussagen kann, mit welchem Liganden bei einer bestimmten Reaktion mit einem definierten Substrat eine gute Katalysatoraktivität und Stereoselektivität zu erzielen ist. Geeignete Liganden werden daher heute durch Reihenuntersuchungen identifiziert. Wenn dann ein geeigneter Ligand gefunden ist, ist es sehr vorteilhaft, eine Optimierung hinsichtlich seiner Struktur und Eigenschaften für die Zielreaktion vornehmen zu können.

Ferrocendiphosphine vom Typ Mandyphos (Trivialname) 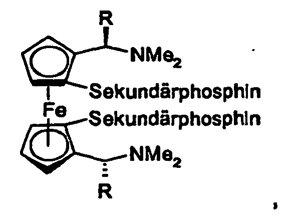 worin R zum Beispiel Methyl oder Phenyl bedeutet, sind seit längerem bekannt und unter anderem von P. Knochel et al. zusammenfassend in Tetrahedron: Asymmetry 10 (1999), Seiten 375 bis 384 beschrieben. Metallkomplexe solcher Liganden können bei bestimmten Substraten zu besseren Hydrierergebnissen führen als mit anderen Diphosphinliganden. Die Eigenschaften dieser Liganden lassen sich nur durch die Wahl der Substituenten R und/oder der Substituenten In den sekundären Phosphingruppen variieren. Dabei ist es äusserst wünschenswert, den Einsatzbereich der Liganden zu verbreitern, indem man weitere Optimierungsmöglichkeiten durch Strukturveränderungen an einem oder beiden Cylopentadienylringen nutzt. Es sind jedoch keine solchen Strukturmodifikationen noch Verfahren dafür bekannt geworden.

Es wurde nun überraschend gefunden, dass durch Einführen von Substituenten und/oder Variation der sekundären Amingruppe in einem oder beiden Cylopentadienylringen des eingangs erwähnten Ligandentyps in vielen Fällen die katalytischen Eigenschaften von entsprechenden Metallkomplexen deutlich beeinflussbar sind und katalytische Reaktionen hinsichtlich ausgewählter Substrate besser optimiert und wesentlich verbessert werden können. Es wurde ferner gefunden, dass solche neuen Diphosphinliganden über neue Herstellungsverfahren zugänglich und modular über definierte Zwischenprodukte herstellbar sind.

Ein erster Gegenstand der vorliegenden Erfindung sind Verbindungen der Formel I oder I' in Form von Racematen, Gemischen von Stereoisomeren oder optisch reinen Stereisoomeren, 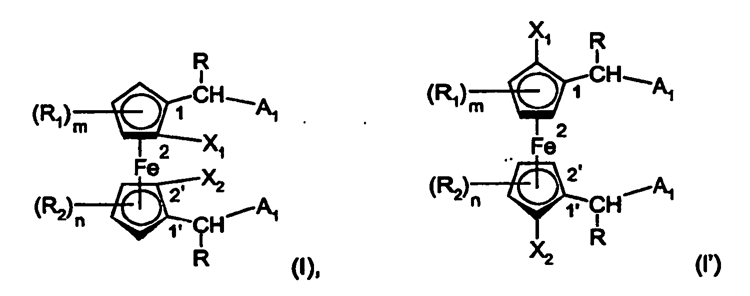 worin
R Wasserstoff, oder unsubstituiertes oder mit F, Cl, OH, C₁-C₄-Alkyl oder C₁-C₄-Alkoxy substituiertes C₁-C₈-Alkyl, C₃-C₈-Cycloalkyl, C₆-C₁₀-Aryl oder C₇-C₁₁-Aralkyl bedeutet;
X₁ und X₂ unabhängig voneinander eine sekundäre Phosphingruppe darstellen;
A₁ für eine Aminogruppe steht; oder
A₁ einen Rest -OR₃ darstellt, worin R₃ Wasserstoff oder unsubstituiertes oder mit F, C₁-C₄-Alkyl, C₁-C₄-Alkoxy, Phenyl oder -N(C₁-C₄-Alkyl)₂ substituiertes C₁-C₁₈-Alkyl, C₃-C₈-Cycloalkyl, C₆-C₁₀-Aryl, C₇-C₁₁-Aralkyl oder C₁-C₁₈-Acyl bedeutet;
R₁ und R₂ unabhängig voneinander ein Halogenatom oder einen über ein C-Atom, N-Atom, S-Atom, Si-Atom, eine P(O)- oder P(S)-Gruppe an die Cyclopentadienylringe gebundenen Substituenten bedeuten;
m für eine Zahl von 1 bis 3, und
n für 0 oder eine Zahl von 1 bis 3 stehen.

Unter den Stereoisomeren sind solche mit R,S,R',S'-, R,R,R',R'-, S,R,S',R- und S,S,S',S' Konfiguration und Gemische davon bevorzugt.

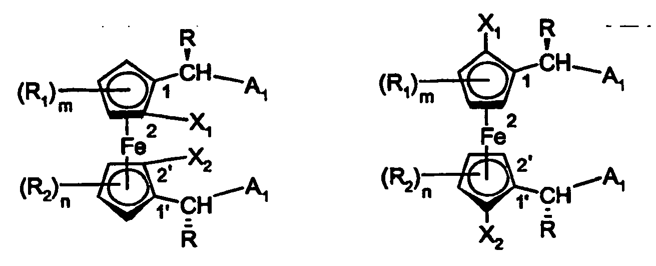

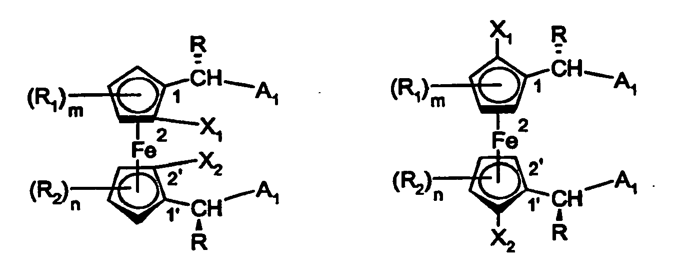

R als C₁-C₈-Alkyl kann linear und verzweigt sein und bevorzugt ist R₁ als Alkyl C₁-C₄-Alkyl. Es kann sich zum Beispiel um Methyl, Ethyl, n- oder i-Propyl und n-, i- oder t-Butyl sowie um die isomeren von Pentyl, Hexyl, Heptyl und Octyl handeln. Beispiele für substituiertes Alkyl sind Fluormethyl, Difluormethyl, Trifluormethyl, Trifluorethyl, Hydroxymethyl, β-Hydroxyethyl, Methoxymethyl, Etoxymethyl und β-Methoxyethyl. Das Alkyl ist bevorzugt linear. Bevorzugt bedeutet R₁ als Alkyl Methyl oder Ethyl.

R ist als Cycloalkyl bevorzugt C₅-C₈-Cycloalkyl. Es kann sich zum Beispiel um Cyclopropyl, Cyclobutyl, Cyclopentyl, Cyclohexyl, Cycloheptyl oder Cyclooctyl handeln, die zum Beispiel mit F, C₁-C₄-Alkyl oder C₁-C₄-Alkoyy substituiert sein können. Bevorzugtes Cycloalkyl ist Cyclopentyl und Cyclohexyl.

Bei R als C₆-C₁₀-Aryl kann zum Beispiel Phenyl oder Naphthyl handlen. Bevorzugt ist R₁ als Aryl Phenyl, das unsubstituiert oder mit F, Cl, C₁-C₄-Alkyl oder C₁-C₄-Alkoyy substituiert ist.

R bedeutet als Aralkyl bevorzugt Phenyl-C₁-C₄-Alkyl und besonders bevorzugt Benzyl und β-Phenylethyl, wobei die Phenylgruppe mit F, Cl, C₁-C₄-Alkyl oder C₁-C₄-Alkoyy substituiert sein kann.

In einer bevorzugten Ausführungsform stellt in den Verbindungen der Formel IR Wasserstoff, Methyl, Ethyl, Cyclohexyl, Benzyl oder Phenyl dar.

Die sekundären Phosphingruppen X₁, und X₂ können zwei gleiche oder zwei verschiedene Kohlenwasserstoffreste enthalten. Bevorzugt enthalten die sekundären Phosphingruppen X₁ und X₂ je zwei gleiche Kohlenwasserstoffreste. Ferner können die sekundären Phosphingruppen X₁ und X₂ gleich oder verschieden sein. Bevorzugt sind die sekundären Phosphingruppen X₁ und X₂ gleich.

Die Kohlenwasserstoffreste können unsubstituiert oder substituiert sein und und/oder Heteroatome ausgewählt aus der Gruppe O, S oder N enthalten. Sie können 1 bis 22, bevorzugt 1 bis 18, und besonders bevorzugt 1 bis 14 C-Atome enthalten. Ein bevorzugtes Sekundärphosphin ist jenes, worin die Phosphingruppe zwei gleiche oder verschiedene Reste, ausgewählt aus der Gruppe lineares oder verzweigtes C₁-C₁₂-Alkyl; unsubstituiertes oder mit C₁-C₆-Alkyl oder C₁-C₆-Alkoxy substituiertes C₅-C₁₂-Cycloalkyl oder C₆-C₁₂-Cycloalkyl-CH₂; Phenyl, Naphthyl, Furyl oder Benzyl; oder mit Halogen (zum Beispiel F, Cl und Br), C₁-C₆-Alkyl, C₁-C₈-Halogenalkyl (zum Beispiel Trifluormethyl), C₁-C₆-Alkoxy, C₁-C₆-Halogenalkoxy (zum Beispiel Trifluormethoxy), (C₆H₅)₃Si, (C₁-C₁₂-Alkyl)₃Si, Sekundäramino oder -CO₂-C₁-C₆-Alkyl (zum Beispiel -CO₂CH₃) substituiertes Phenyl oder Benzyl, enthält

Beispiele für P-Substituenten als Alkyl, das bevorzugt 1 bis 6 C-Atome enthält, sind Methyl, Ethyl, n-Propyl, i-Propyl, n-Butyl, i-Butyl, t-Butyl, und die Isomeren von Pentyl und Hexyl. Beispiele für P-Substituenten als gegebenenfalls mit Alkyl substituiertes Cycloalkyl sind Cyclopentyl, Cyclohexyl, Methyl- und Ethylcyclopentyl, Dimethylcyclopentyl, Methyl- und Ethylcyclohexyl, und Dimethylcyclohextyl. Beispiele für P-Substituenten als mit Alkyl, Alkoxy, Halogenalkyl, Halogenalkoxy und Halogen substituiertes Phenyl und Benzyl sind o-, m- oder p-Fluorphenyl, o-, m- oder p-Chlorphenyl, Difluor- oder Dichlorphenyl, Pentafluorphenyl, Methylphenyl, Dimethylphenyl, Trimethylphenyl, Ethylphenyl, Methylbenzyl, Methoxyphenyl, Dimethoxyphenyl, Trifluormethylphenyl, Bis-trifluormethylphenyl, Tris-trifluormethylphenyl, Trifluormethoxyphenyl, Bis-trifluormethoxyphenyl und 3,5-Dimethyl-4-methoxyphenyl.

Bevorzugte sekundäre Phosphingruppen sind solche, die gleiche Reste ausgewählt aus der Gruppe C₁-C₆-Alkyl, unsubstituiertes oder mit 1 bis 3 C₁-C₄-Alkyl oder C₁-C₄-Alkoxy substituiertes Cyclopentyl oder Cyclohexyl, Benzyl und besonders Phenyl, die unsubstituiert oder substituiert sind mit 1 bis 3 C₁-C₄-Alkyl, C₁-C₄-Alkoxy, F, Cl, C₁-C₄-Fluoralkyl oder C₁-C₄-Fluoralkoxy, enthalten. Der Substituent F kann auch noch vier- oder fünfmal enthalten sein.

Die Sekundärphosphinogruppe entspricht bevorzugt der Formel -PR₃R₄, worin R₃ und R₄ unabhängig voneinander einen Kohlenwasserstoffrest mit 1 bis 18 C-Atomen darstellen, der unsubstituiert oder substituiert ist mit Halogen, C₁-C₆Alkyl, C₁-C₆-Halogenalkyl, C₁-C₆-Alkoxy, C₁-C₆-Halogenalkoxy, (C₁-C₄-Alkyl)₂amino, (C₆H₅)₃Si, (C₁-C₁₂-Alkyl)₃Si, oder -CO₂C₁-C₆-Alkyl, und/oder Heteroatome O enthält.

Bevorzugt sind R₃ und R₄ gleiche Reste, ausgewählt aus der Gruppe lineares oder verzweigtes C₁-C₆-Alkyl, unsubstituiertes oder mit ein bis drei C₁-C₄-Alkyl oder C₁-C₄-Alkoxy substituiertes Cyclopentyl oder Cyclohexyl, Furyl, Norbomyl, Adamantyl, unsubstituiertes oder mit ein bis drei C₁-C₄-Alkyl oder C₁-C₄-Alkoxy substituiertes Benzyl, und insbesondere unsubstituiertes oder mit ein bis drei C₁-C₄-Alkyl, C₁-C₄-Alkoxy, -NH₂,-N(C₁-C₆-Alkyl)₂, OH, F, Cl, C₁-C₄-Fluoralkyl oder C₁-C₄-Fluoralkoxy substituiertes Phenyl.

Besonders bevorzugt bedeuten R₃ und R₄ gleiche Reste, ausgewählt aus der Gruppe C₁-C₆-Alkyl, Cyclopentyl, Cyclohexyl, Furyl, und unsubstituiertes oder mit ein bis drei C₁-C₄-Alkyl, C₁-C₄-Alkoxy und/oder C₁-C₄-Fluoralkyl substituiertes Phenyl.

Bei den sekundären Phosphingruppen X₁ und X₂ kann es sich um zyklisches Sekundärphosphino handeln, zum Beispiel solches der Formeln 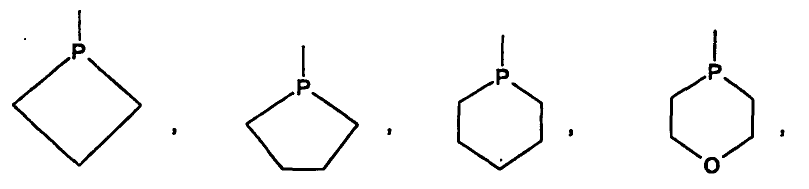 die unsubstituiert oder ein- oder mehrfach substituiert sind mit -OH, C₁-C₈Alkyl, C₄-C₈-Cycloalkyl, C₁-C₆-Alkoxy, C₁-C₄-Alkoxy-C₁-C₄-Alkyl, Phenyl, C₁-C₄-Alkyl- oder C₁-C₄-Alkoxyphenyl, Benzyl, C₁-C₄-Alkyl- oder C₁-C₄-Alkoxybenzyl, Benzyloxy, C₁-C₄-Alkyl- oder C₁-C₄-Alkoxybenzyloxy, oder C₁-C₄-Alkyliden-dioxyl.

Die Substituenten können in einer oder beiden α-Stellungen zum P-Atom gebunden sein, um chirale C-Atome einzuführen. Bei den Substituenten in einer oder beiden α-Stellungen handelt es sich bevorzugt um C₁-C₄-Alkyl oder Benzyl, zum Beispiel um Methyl, Ethyl, n- oder i-Propyl, Benzyl oder -CH₂-O-C₁-C₄-Alkyl beziehungsweise -CH₂-O-C₆-C₁₀-Aryl.

Bei Substituenten in den β,γ-Stellungen kann es sich zum Beispiel um C₁-C₄-Alkyl, C₁-C₄-Alkoxy, Benzyloxy, oder -O-CH₂-O-, -O-CH(C₁-C₄-Alkyl)-O-, -O-C(C₁-C₄-Alkyl)₂-O- und -O-CH(C₆-C₁₀-Aryl)-O- handeln. Einige Beispiele sind Methyl, Ethyl, Methoxy, Ethoxy, -O-CH(Phenyl)-O-, -O-CH(Methyl)-O- und -O-C(Methyl)₂-O-.

An zwei benachbarte C-Atome in den Resten der obigen Formeln kann ein aliphatischer 5- oder 6-Ring oder Benzol ankondensiert sein.

Andere bekannte und geeignete sekundäre Phosphinreste sind solche von zyklischen und chiralen Phospholanen mit sieben C-Atomen im Ring, zum Beispiel solche der Formeln

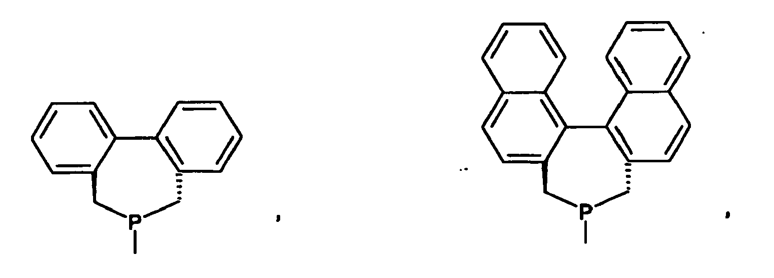

in denen die aromatischen Ringe mit C₁-C₄-Alkyl, C₁-C₄-Alkoxy, C₁-C₄-Alkoxy-C₁-C₂-Alkyl, Phenyl, Benzyl, Benzyloxy oder C₁-C₄-Alkyliden-dioxyl oder C₁-C₄-Alkylen-dioxyl substituiert sein können (siehe US 2003/0073868 A1 und WO 02/048161).

Je nach Art der Substitution und Anzahl der Substituenten können die zyklischen Phosphinreste C-chiral, P-chiral oder C- und P-chiral sein.

Das zyklische Sekundärphosphino kann zum Beispiel den Formeln (nur eines der möglichen Diastereomeren angegeben) entsprechen, 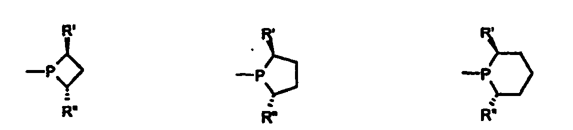 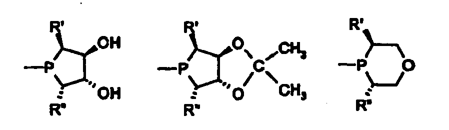 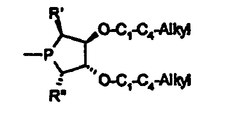 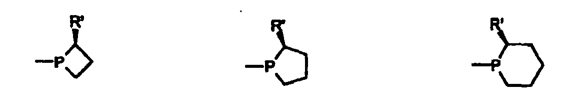 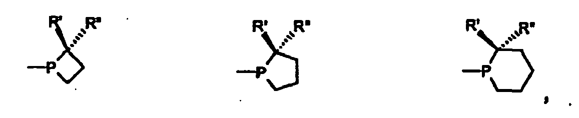 worin
die Reste R' und R" für C₁-C₄-Alkyl, zum Beispiel Methyl, Ethyl, n- oder i-Propyl, Benzyl, oder -CH₂-O-C₁-C₄-Alkyl beziehungsweise -CH₂-O-C₆-C₁₀-Aryl stehen, und R' und R" gleich oder voneinander verschieden sind. Wenn R' und R" am selben C-Atom gebunden sind, können sie auch zusammen C₄-C₅-Alkylen sein.

In einer bevorzugten Ausführungsform bedeuten bevorzugt in den Verbindungen der Formel I und I' die X₁ und X₂ gleiches oder verschiedenes nicht-zyklisches Sekundärphosphin, ausgewählt aus der Gruppe -P(C₁-C₆-Alkyl)₂, -P(C₅-C₈-Cycloalkyl)₂, -P(C₇-C₁₂-Bicycloalkyl)₂,-P(o-Furyl)₂, -P(C₈H₅)₂, -P[2-(C₁-C₆-Alkyl)C₆H₄]₂, -P[3-(C₁-C₆-Alkyl)C₆H₄]₂, -P[4-(C₁-C₆-Alkyl)C₆H₄]₂, -P[2-(C₁-C₆-Alkoxy)C₆H₄]₂, -P[3-(C₁-C₆-Alkoxy)C₆H₄]₂, -P[4-(C₁-C₆-Alkoxy)C₆H₄]₂, -P[2-(Trifluormethyl)C₆H₄]₂, -P[3-(Trifluormethyl)C₆H₄]₂, -P[4-(Triftuormethyl)C₆H₄]₂, -P[3,5-Bis(trifluormethyl)C₆H₃]₂, -P[3,5-Bis(C₁-C₆-Alkyl)₂C₆H₃]₂, -P[3,5-Bis(C₁-C₆-Alkoxy)₂C₆H₃]₂, -P[3,4,5-Tris(C₁-C₆-Alkoxy)₂C₆H₃]₂, und -P[3,5-Bis(C₁-C₆-Alkyl)₂-4-(C₁-C₆-Alkoxy)C₆H₂]₂, oder zyklisches Phosphin, ausgewählt aus der Gruppe 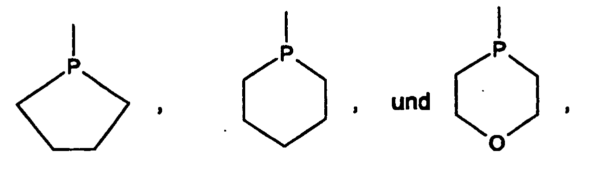 die unsubstituiert oder ein- oder mehrfach substituiert sind mit C₁-C₄-Alkyl, C₁-C₄-Alkoxy, C₁-C₄-Alkoxy-C₁-C₂-Alkyl, Phenyl, Benzyl, Benzyloxy, C₁-C₄-Alkyliden-dioxyl oder gegebenenfalls mit Phenyl substituiertes Methylendioxyl.

Einige spezifische Beispiele sind -P(CH₃)₂, -P(i-C₃H₇)₂, -P(n-C₄H₉)₂, -P(i-C₄H₉)₂, -P(C₆H₁₁)₂, -P(Norbomyl)₂, -P(o-Furyl)₂, -P(C₆H₅)₂, P[2-(Methyl)C₆H₄]₂, P[3-(Methyl)C₆H₄]₂, -P[4-(Methyl)C₆H₄]₂, -P[2-(Methoxy)C₆H₄]₂, -P[3-(Methoxy)C₆H₄]₂, -P[4-(Methoxy)C₆H₄]₂, -P[3-(Trifluormethyl)C₆H₄]₂, -P[4-(Trifluormethyl)C₆H₄]₂, -P[3,5-Bis(trifluormethyl)C₆H₃]₂, -P[3,5-Bis-(methyl)C₆H₃]₂, -P[3,5-Bis(methoxy)C₆H₃]₂, -P[3,4,5-Tri(methoxy)C₆H₂]₂,-P[3,5-Bis(methyl)₂-4-(methoxy)C₆H₂]₂, und solche der Formeln 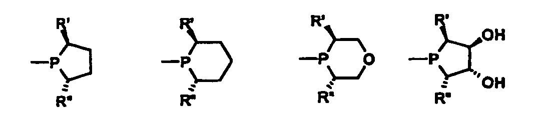 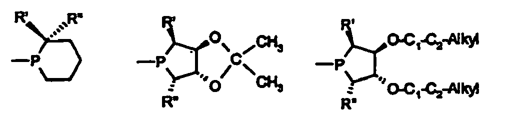 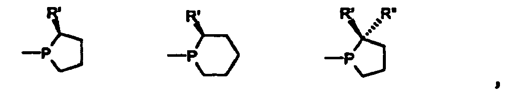 worin
R' Methyl, Ethyl, Methoxy, Ethoxy, Phenoxy, Benzyloxy, Methoxymethyl, Ethoxymethyl oder Benzyloxymethyl darstellt und R^{a} die gleiche Bedeutung wie R' hat.

Bei der Aminogruppe A₁ kann es sich um -NH₂, -NHR₅ oder -NR₅R₆ handeln, wobei R₅ und R₆ unabhängig voneinander gegebenenfalls substituierte aliphatische, cycloaliphatische oder aromatische Kohlenwasserstoffreste bedeuten oder R₅ und R₆ zusammen mit dem N-Atom einen N-heterozyklischen Ring bilden, der weitere Heteroatome aus der Gruppe O, S oder N(C₁-C₄-Alkyl) enthalten kann. Der N-heterozyklischen Ring enthält bevorzugt 3 bis 12, bevorzugter 3 bis 8 und besonders bevorzugt 5 bis 8 Ringglieder. Die Gruppen -NHR₅ oder -NR₅R₆ enthalten bevorzugt insgesamt 2 bis 24 C-Atome, bevorzugter 2 bis 16 C-Atome, und besonders bevorzugt 2 bis 12 C-Atome.handeln

Die Kohlenwasserstoffreste und N-heterozyklischen Ringe können ein- oder mehrfach, zum Beispiel ein- bis dreifach, bevorzugt ein- oder zweifach substituiert sein, zum Beispiel mit Halogen (F oder Cl, besonders F), -CN, -NR₀₁R₀₂, -C(O)-O-R₀₃, -C(O)-NR₀₃R₀₄, -O-(O)C-R₀₄, -R₀₁N-(O)C-R₀₄, C₁-C₄-Alkyl, C₁-C₄-Alkoxy, C₁-C₄-Alkoxy-C₁-C₄ Alkyl, C₁-C₄-Alkylthio-C₁-C₄-Alkyl, C₅-C₆-Cycloalkyl, C₅-C₆-Cycloalkoxy, Phenyl, Benzyl, Phenoxy oder Benzyloxy, wobei R₀₁ und R₀₂ unabhängig voneinander für Wasserstoff, C₁-C₄-Alkyl, Cyclopentyl, Cyclohexyl, Phenyl, Benzyl oder R₀₁ und R₀₂ zusammen Tetramethylen, Pentamethylen oder 3-Oxapentan-1,5-diyl stehen, R₀₃ Wasserstoff, C₁-C₈-Alkyl, C₅-C₈-Cycloalkyl, Phenyl oder Benzyl darstellt, und R₀₄ C₁-C₁₈-Alkyl und bevorzugt C₁-C₁₂-Alkyl, C₁-C₄-Halogenalkyl, C₁-C₄-Hydroxyalkyl, C₅-C₈-Cycloalkyl (zum Beispiel Cyclopentyl, Cyclohexyl), C₈-C₁₀-Aryl (zum Beispiel Phenyl oder Naphthyl) oder C₇-C₁₂-Aralkyl (zum Beispiel Benzyl) bedeutet.

A₁ kann als Aminogruppe den Formeln -NHR₅ und R₅R₆N- entsprechen, worin R₅ und R₆ unabhängig voneinander gegebenenfalls wie zuvor beschrieben substituiertes C₁-C₁₂-Alkyl und bevorzugt C₁-C₆-Alkyl, C₃-C₈-Cycloalkyl und bevorzugt C₅-C₈-Cycloalkyl, C₆-C₁₀-Aryl und bevorzugt Phenyl, und C₇-C₁₁-Aralkyl und bevorzugt Benzyl darstellen, oder R₅ und R₆ zusammen mit dem N-Atom einen gegebenenfalls wie zuvor beschrieben substituierten 3 bis 8-gliedrigen und bevorzugt 5- bis 8-gliedrigen N-heterozyklischen Ring bilden.

Beispiele für Alkyl, das bevorzugt linear ist, sind Methyl, Ethyl, Propyl Butyl, Pentyl, Hexyl, Heptyl und Octyl. und. Beispiele für Cycloalkyl sind Cyclopentyl, Cyclohexyl und Cyclooctyl. Beispiele für Cycloalkyl sind besonders Cyclopentyl und Cyclohexyl. R₅ und R₆ sind zusammen bevorzugt Tetramethylen, Pentamethylen, 3-Oxapentylen oder 3-(C₁-C₄-Alkyl)N-pentylen, wenn das Sekundäramino einen N-heterozyklischen Ring bildet

Wenn die Reste R₅ und R₆ asymmetrische C-Atome enthalten, befinden sich diese zum Beispiel in γ-Stellung und bevorzugt den α- beziehungsweise β-Stellungen zum N-Atom. Bevorzugte Substituenten zur Bildung asymmetrischer C-Atome sind C₁-C₄-Alkyl, C₆-C₆-Cycloalkyl, Phenyl, Benzyl, C₁-C₄-Alkoxy, C₁-C₄-Alkoxymethyl, C₁-C₄-Alkoxyethyl, (C₁-C₄-Alkyl)₂N-, (C₁-C₄-Alkyl)₂N-methyl und (C₁-C₄-Alkyl)₂N-ethyl.

In einer bevorzugten Ausführungsform stellen R₅ und R₆ Methyl, Ethyl, die Isomeren von Propyl und Butyl, Phenyl, Benzyl, Cyclohexyl oder R₅ und R₆ zusammen Tetramethylen, Pentamethylen oder 3-Oxapentylen dar, die unsubstituiert oder mit C₁-C₄-Alkyl, C₅-C₆-Cycloalkyl, Phenyl, Benzyl, C₁-C₄-Alkoxy, C₁-C₄-Alkoxymethyl, C₁-C₄-Alkoxyethyl, (C₁-C₄-Alkyl)₂N-. (C₁-C₄-Alkyl)₂N-methyl und (C₁-C₄-Alkyl)₂N-ethyl substituiert sind.

Der Rest R₃ kann als Alkyl C₁-C₁₂-Alkyl und bevorzugt C₁-C₆-Alkyl darstellen. Der Rest R₃ kann als Cycloalkyl C₅-C₈-Cycloalkyl bedeuten. Der Rest R₃ bedeutet als Aryl bevorzugt Phenyl und als Aralkyl bevorzugt Benzyl. R₃ enthält als Acyl bevorzugt 1 bis 12 und besonders bevorzugt 1 bis 8 C-Atome. Das Acyl leitet sich bevorzugt von Karbonsäuren ab, zum Beispiel Ameisensäure, Essigsäure, Propionsäure, Buttersäure, Chloressigsäure, Hydroxyessigsäure, Methoxyessigsäure und Benzoesäure.

In einer bevorzugten Ausführungsform der Verbindungen der Formel I sind die Substituenten R₁ und R₂ einmal (m ist 1 und n ist 0), je einmal (m und n sind 1), zweimal (entweder m oder n ist 2), oder dreimal (m ist 2 und n ist 1) im Cyclopentadienylring beziehungsweise den Cyclopentadienylringen gebunden. Bevorzugte Positionen für die Substituenten R₁ und R₂ sind die 3, 3', 5 und 5' Stellungen. Bevorzugte Substitutionsmuster sind die 3-Stellung, die 3- und 3'-Stellungen, die 5-Stellung und die 5- und 5'-Stellungen. Die Summe von m + n ist bevorzugt von 1 bis 5, bevorzugter 1 bis 4 und besonders bevorzugt 1 bis 3.

Substituenten R₁ und R₂ können ihrerseits ein- oder mehrfach, zum Beispiel ein- bis dreifach, bevorzugt ein- oder zweifach substituiert sein, zum Beispiel mit Halogen (F, Cl oder Br, besonders F), -OH, -SH, -CH(O),-CN, -NR₀₁R₀₂, -C(O)-O-R₀₃, -S(O)-O-R₀₃, -S(O)₂-O-R₀₃, -P(OR₀₃)₂, -P(O)(OR₀₃)₂, -C(O)-NR₀₁R₀₂, -S(O)-NR₀₁R₀₂, -S(O)₂-NR₀₁R₀₂, -O-(O)C-R₀₄, -R₀₁N-(O)C-R₀₄, -R₀₁N-S(O)-R₀₄, -R₀₁N-S(O)₂-R₀₄, C₁-C₄-Alkyl, C₁-C₄-Alkoxy, C₁-C₄-Alkylthio, C₅-C₆-Cycloalkyl, Phenyl, Benzyl, Phenoxy oder Benzyloxy, wobei R₀₁ und R₀₂ unabhängig voneinander für Wasserstoff, C₁-C₄-Alkyl, Cyclopentyl, Cyclohexyl, Phenyl, Benzyl oder R₀₁ und R₀₂ zusammen Tetramethylen, Pentamethylen oder 3-Oxapentan-1,5-diyl stehen, R₀₃ Wasserstoff, C₁-C₈-Alkyl, C₅-C₈-Cycloalkyl, Phenyl oder Benzyl darstellt, und R₀₄ C₁-C₁₈-Alkyl und bevorzugt C₁-C₁₂-Alkyl, C₁-C₄-Halogenalkyl, C₁-C₄-Hydroxyalkyl, C₅-C₈-Cycloalkyl (zum Beispiel Cyclopentyl, Cyclohexyl), C₆-C₁₀-Aryl (zum Beispiel Phenyl oder Naphthyl) oder C₇-C₁₂-Aralkyl (zum Beispiel Benzyl) bedeutet.

Bei den gegebenenfalls substituierten Substituenten R₁ und R₂ kann es sich zum Beispiel um C₁-C₁₂-Alkyl, bevorzugt C₁-C₈-Alkyl und besonders bevorzugt C₁-C₄-Alkyl handeln. Beispiele sind Methyl, Ethyl, n- oder i-Propyl, n-, i- oder t-Butyl, Pentyl Hexyl, Hepthyl, Octyl, Decyl und Dodecyl.

Bei den gegebenenfalls substituierten Substituenten R₁ und R₂ kann es sich zum Beispiel um C₅-C₈-Cycloalkyl, bevorzugt C₅-C₆-Cycloalkyl handeln. Beispiele sind Cyclopentyl, Cyclohexyl und Cyclooctyl.

Bei den gegebenenfalls substituierten Substituenten R₁ und R₂ kann es sich zum Beispiel um C₅-C₈-Cycloalkyl-alkyl, bevorzugt C₅-C₆-Cycloalkyl-alkyl handeln. Beispiele sind Cyclopentylmethyl, Cyclohexylmethyl oder -ethyl und Cyclooctylmethyl.

Bei den gegebenenfalls substituierten Substituenten R₁ und R₂ kann es sich zum Beispiel um C₆-C₁₆-Aryl und bevorzugt C₆-C₁₀-Aryl handeln. Beispiele sind Phenyl oder Naphthyl.

Bei den gegebenenfalls substituierten Substituenten R₁ und R₂ kann es sich zum Beispiel um C₇-C₁₂-Aralkyl handeln, (zum Beispiel Benzyl oder 1-Phenyleth-2-yl).

Bei den gegebenenfalls substituierten Substituenten R₁ und R₂ kann es sich zum Beispiel um Tri(C₁-C₄-Alkyl)Si oder Triphenylsilyl handel. Beispiele für Trialkylsilyl sind Trimethyl-, Tri- ethyl-, Tri-n-propyl-, Tri-n-Butyl- und Dimethyl-t-butylsilyl.

Bei den Substituenten R₁ und R₂ kann es sich zum Beispiel um Halogen handeln. Beispiele sind F, Cl und Br.

Bei den gegebenenfalls substituierten Substituenten R₁ und R₂ kann es sich zum Beispiel um einen Thiorest oder Sulfoxid- oder einen Sulfonrest der Formeln -SR₀₅, -S(O)R₀₅ und -S(O)₂R₀₅ handeln, worin R₀₅ C₁-C₁₂-Alkyl, bevorzugt C₁-C₈-Alkyl und besonders bevorzugt C₁-C₄-Alkyl; C₅-C₈-Cycloalkyl, bevorzugt C₅-C₆-Cycloalkyl; C₈-C₁₈-Aryl und bevorzugt C₆-C₁₀-Aryl; oder C₇-C₁₂-Aralkyl bedeutet. Beispiele für diese Kohlenwasserstoffreste sind zuvor erwähnt worden.

Bei den Substituenten R₁ und R₂ kann es sich zum Beispiel um -CH(O), -C(O)-C₁-C₄-Alkyl oder -C(O)-C₆-C₁₀-Aryl handeln.

Bei den gegebenenfalls substituierten Substituenten R₁ und R₂ kann es sich zum Beispiel um Reste -CO₂R₀₃, oder -C(O)-NR₀₁R₀₂ handeln, worin R₀₁, R₀₂ und R₀₃ die zuvor angegebenen Bedeutungen haben, einschliesslich der Bevorzugungen.

Bei den gegebenenfalls substituierten Substituenten R₁ und R₂ kann es sich zum Beispiel um Reste -S(O)-O-R₀₃,-S(O)₂-O-R₀₃, -S(O)-NR₀₁R₀₂ und -S(O)₂-NR₀₁R₀₂ handeln, worin R₀₁, R₀₂ und R₀₃ die zuvor angegebenen Bedeutungen haben, einschliesslich der Bevorzugungen.

Bei den gegebenenfalls substituierten Substituenten R₁ und R₂ kann es sich zum Beispiel um Reste -P(OR₀₃)₂ oder -P(O)(OR₀₃)₂ handeln, worin R₀₃ die zuvor angegebenen Bedeutungen hat, einschliesslich der Bevorzugungen.

Bei den gegebenenfalls substituierten Substituenten R₁ und R₂ kann es sich zum Beispiel um Reste -P(O)(R₀₃)₂ oder -P(S)(OR₀₃)₂ handeln, worin R₀₃ die zuvor angegebenen Bedeutungen hat, einschliesslich der Bevorzugungen.

In einer bevorzugten Gruppe der Substituenten R₁ und R₂ sind diese ausgewählt aus C₁-C₄-Alkyl, gegebenenfalls substituiertem Phenyl, Tri(C₁-C₄-Alkyl)Si, Triphenylsilyl, Halogen (besonders F, Cl und Br), -SR₀₆, -CH₂OH, -CHR₀₆OH, -CR₀₆R'₀₆OH, -CH₂O-R₀₆, -CH(O), -CO₂H, -CO₂R₀₆, worin R₀₆ einen Kohlenwasserstoffrest mit 1 bis 10 C-Atomen darstellt, und -P(O)(R₀₃)₂, worin R₀₃ die zuvor angegebene Bedeutung hat. Besonders bevorzugt sind R₁ und R₂ C₁-C₄-Alkyl, besonders Methyl, und Tri(C₁-C₄-Alkyl)Si, besonders Trmethylsilyl.

Beispiele für gegebenenfalls substituierte Substituenten R₁ und R₂ sind Methyl, Ethyl, n- und i-Propyl, n-, i- und t-Butyl, Pentyl, Hexyl, Cyclohexyl, Cyclohexylmethyl, Phenyl, Benzyl, Trimethylsilyl, F, Cl, Br, Methylthio, Methylsulfonyl, Methylsulfoxyl, Phenylthio, Phenylsulfonyl, Phenylsulfoxyl, -CH(O), -C(O)OH, -C(O)-OCH₃, -C(O)-OC₂H₅, -C(O)-NH₂, -C(O)-NHCH₃; -C(O)-N(CH₃)₂, -SO₃H, -S(O)-OCH₃, -S(O)-OC₂H₅, -S(O)₂-OCH₃, -S(O)₂C₂H₅, -S(O)-NH₂, -S(O)-NHCH₃, -S(O)-N(CH₃)₂, -S(O)-NH₂, -S(O)₂NHCH₃, -S(O)₂-N(CH₃)₂, -P(OH)₂, -PO(OH)₂, -P(OCH₃)₂, -P(OC₂H₅)₂, -PO(OCH₃)₂, -PO(OC₂H₅)₂, Trifluormethyl, Methylcyclohexyl, Methylcyclohexylmethyl, Methylphenyl, Dimethylphenyl, Methoxyphenyl, Dimethoxyphenyl, Hydroxymethyl, β-Hydroxyethyl, γ-Hydroxypropyl, -CH₂NH₂ -CH₂N(CH₃)₂, -CH₂CH₂NH₂, -CH₂CH₂N(CH₃)₂, Methoxymethyl, Ethoxymethyl, Methoxyethyl, Ethoxyethyl, HS-CH₂-, HS-CH₂CH₂-, CH₃S-CH₂-, CH₃S-CH₂CH₂-, -CH₂-C(O)OH, -CH₂CH₂-C(O)OH, -CH₂-C(O)OCH₃, -CH₂CH₂-C(O)OCH₃, -CH₂-C(O)NH₂, -CH₂CH₂-C(O)NH₂, -CH₂-C(O)-N(CH₃)₂, -CH₂CH₂-C(O)N(CH₃)₂, -CH₂-SO₃H, -CH₂CH₂-SO₃H, -CH₂-SO₃CH₃, -CH₂CH₂-SO₃CH₃, -CH₂-SO₂NH₂, -CH₂-SO₂N(CH₃)₂, -CH₂-PO₃H₂, -CH₂CH₂-PO₃H₂, -CH₂-PO(OCH₃), -CH₂CH₂-PO(OCH₃)₂, -C₆H₄-C(O)OH, -C₆H₄-C(O)OCH₃, -C₆H₄-S(O)₂OH, -C₆H₄-S(O)₂OCH₃, -CH₂-O-C(O)CH₃, -CH₂CH₂-O-C(O)CH₃, -CH₂-NH-C(O)CH₃, -CH₂CH₂-NH-C(O)CH₃, -CH₂-O-S(O)₂CH₃, -CH₂CH₂-O-S(O)₂CH₃, -CH₂-NH-S(O)₂CH₃, -CH₂CH₂-NH-S(O)₂CH₃, -P(O)(C₁-C₈-und -C(O)-C₈-C₁₀-Aryl.

Die Verbindungen der Formel I können nach verschieden Verfahren hergestellt werden, je nachdem, in welcher Position Substituenten eingeführt werden sollen. Die Orthostellungen im Cylopentadienyl (nachfolgend als cp abgekürzt) zu den Gruppen X₁ und X₂ sind die 3- beziehungsweise 3'-Stellungen. Die Orthostellungen im cp zu den Gruppen A₁CHR- sind die 5-beziehungsweise 5'-Stellungen. Zwischen den 3- und 5-Stellungen befinden sich die 4-Positionen.

Wenn nur ein Substituent in der 3-Stellung eines cp-Ringes eingeführt werden soll, kann man von bekannten und teilweise käuflichen 1,1'-Bis(1-sekundäramino-eth-1-yl)ferrocen ausgehen, die in einer Verfahrensstufe a) mit Metallierungsreagenzien wie zum Beispiel Lithiumalkyl metalliert und anschliessend das Metall durch Brom ersetzt wird. Danach kann man in einer Verfahrensstufe b) erneut selektiv die Orthostellung zum Brom mit Li-Amiden lithiieren und darauf in einer Verfahrensstufe c) gewünschte Substituenten durch Umsetzung mit entsprechenden Elektrophilen einführen. Im letzten Reaktionsschritt d) werden zunächst die Bromatome in den 2,2'-Stellungen metalliert (zum Beispiel mit Lithiumalkyl) und darauf mit X₁-Halogenid zur Einführung der sekundären Phosphingruppen umsetzt.

Bei der Metallierung von Ferrocenen gemäss der ersten Verfahrensstufe handelt es sich um bekannte Reaktionen, die zum Beispiel von T. Hayashi et al., Bull. Chem. Soc. Jpn. 53 (1980), Seiten 1138 bis 1151 oder in Jonathan Clayden Organolithiums: Selectivity for Synthesis (Tetrahedron Organic Chemistry Series), Pergamon Press (2002) beschrieben sind. Das Alkyl im Lithiumalkyl kann zum Beispiel 1 bis 4 C-Atome enthalten. Häufig wird Lithiummethyl und Lithiumbutyl verwendet Bei Magnesium-Grignardverbindungen handelt es sich bevorzugt um solche der Formel (C₁-C₄-Alkyl)MgX₀, worin X₀ Cl, Br oder I bedeutet.

Die Reaktion wird zweckmässig bei niedrigen Temperaturen durchgeführt, zum Beispiel 20 bis -100 °C, bevorzugt 0 bis -80 °C. Die Reaktionszeit beträgt etwa von 2 bis zu 20 Stunden. Die Reaktion wird vorteilhaft unter einem inerten Schutzgas durchgeführt, zum Beispiel Stickstoff oder Edelgasen wie Argon.

Die Reaktion wird vorteilhaft in Gegenwart von inerten Lösungsmitteln durchgeführt. Solche Lösungsmittel können alleine oder als Kombination aus wenigstens zwei Lösungsmitteln eingesetzt werden. Beispiele für Lösungsmittel sind aliphatische, cycloaliphatische und aromatische Kohlenwasserstoffe sowie offenkettige oder cyclische Ether. Spezifische Beispiele sind Petrolether, Pentan, Hexan, Cyclohexan, Methylcyclohexan, Benzol, Toluol, Xylol, Diethylether, Dibutylether, Tertiärbutylmethylether, Ethylenglykoldimethyl- oder -diethylether, Tetrahydrofuran und Dioxan.

Die Halogenierung in der Verfahrensstufe a) wird im allgemeinen direkt im Anschluss nach der Metallierung im gleichen Reaktionsgemisch durchgeführt, wobei ähnliche Reaktionsbedingungen wie bei der Metallierung eingehalten werden. Man kann bevorzugt 1 bis 1,4 Äquivalente eines Halogenierungsreagenzes verwenden. Halogenienrngsreagenzien sind zum Beispiel Halogene (Cl₂, Br₂, I₂), Interhalogene (Cl-Br, Cl-l) und aliphatische, perhalogenierte Kohlenwasserstoffe (Cl₃C-CCl₃ oder BrF₂C-CF₂Br) zur Einführung von Cl, Br oder I; oder N-Fluor-bis-(phenyl)-sulfonylamin zur Einführung von Fluor.

Die Metallierung der Verfahrensstufe a) und die Halogenierung verlaufen regioselektiv und die Zwischenverbindungen werden in hohen Ausbeuten erhalten. Die Reaktion ist durch die Anwesenheit der chiralen Gruppe A₁CHR- auch stereoselektiv. Ferner, falls überhaupt notwendig, können optische isomere auf dieser Stufe auch getrennt werden, zum Beispiel chromatographisch mit Hilfe chiraler Säulen.

In der Verfahrensstufe b) wird das Ferrocengerüst erneut im gleichen Cyclopentadienylring regioselektiv in Orthostellung zum Halogenatom metalliert, wobei bereits Metallamide genügen, um das acide H-Atom in Orthostellung zum Halogenatom zu substituieren. Man verwendet wenigstens 1 bis 5 Äquivalenten eines aliphatischen Li-Sekundäramides oder eines Cl-, Br- oder IMg-Sekundäramids pro CH-Gruppe im Cyclopentadienylring des Ferrocens.

Aliphatisches Li-Sekundäramid oder Halogen-Mg-Sekundäramid kann sich von Sekundäraminen ableiten, die 2 bis 18, bevorzugt 2 bis 12, und besonders bevorzugt 2 bis 10 C-Atome enthalten. Bei den an das N-Atom gebundenen aliphatischen Resten kann es sich um Alkyl, Cycloalkyl oder Cycloalkyl-alkyl handeln, oder es kann sich um N-heterocyclische Ringe mit 4 bis 12, und bevorzugt 5 bis 7 C-Atomen handeln. Beispiele für an das N-Atom gebundene Reste sind Methyl, Ethyl, n- und i-Propyl, n-Butyl, Pentyl, Hexyl, Cyclopentyl, Cyclohexyl, und Cyclohexylmethyl. Beispiele für N-heterocyclische Ringe sind Pyrrolidin, Piperidin, Morpholin, N-Methylpiperazin, 2,2,6,6-Tetramethylpiperidin, und Azanorboman. In einer bevorzugten Ausführungsform entsprechen die Amide den Formeln Li-N(C₃-C₄-Alkyl)₂ oder X₂Mg-N(C₃-C₄-Alkyl)₂, worin Alkyl insbesondere i-Propyl ist. In einer anderen bevorzugten Ausführungsform entsprechen die Amide Li(2,2,6,6-Tetramethylpiperidin).

In der Verfahrensstufe c) werden Reste elektrophiler Verbindungen eingeführt unter Substitution des Metalls (M). Man kann 1 bis 1,2 Äquivalenten reaktiver elektrophiler Verbindung pro reagierender =CM-Gruppe in einer aromatischen Verbindung. Es kann jedoch auch ein deutlicher Überschuss von bis zu 2,5 Äquivalenten eingesetzt werden.

Die Reaktion wird zweckmässig bei niedrigen Temperaturen durchgeführt, zum Beispiel 20 bis -100 °C, bevorzugt 0 bis -80 °C. Die Reaktion wird vorteilhaft unter einem inerten Schutzgas durchgeführt, zum Beispiel Edelgasen wie Argon oder auch Stickstoff. Nach Zugabe der reaktiven elektrophilen Verbindung lässt man zweckmässig auf Raumtemperatur erwärmen oder man erwärmt auf erhöhte Temperaturen, zum Beispiel bis zu 100 °C und bevorzugt bis zu 50 °C, und rührt einige Zeit unter diesen Bedingungen zur Vervollständigung der Reaktion.

Die Reaktion wird vorteilhaft in Gegenwart von inerten Lösungsmitteln durchgeführt. Solche Lösungsmittel können alleine oder als Kombination aus wenigstens zwei Lösungsmitteln eingesetzt werden. Beispiele für Lösungsmittel sind aliphatische, cycloaliphatische und aromatische Kohlenwasserstoffe sowie offenkettige oder cyclische Ether. Spezifische Beispiele sind Petrolether, Pentan, Hexan, Heptan, Cyclohexan, Methylcyclohexan, Benzol, Toluol, Xylol, Diethylether, Dibutylether, Tertiärbutylmethylether, Ethylenglykoldimethyl- oder -diethylether, Tetrahydrofuran und Dioxan.

Beispiele für reaktive elektrophile Verbindungen zur Bildung von Resten R₁ beziehungsweise R₂ sind:
Halogene (Cl₂, Br₂, l₂), Interhalogene (Cl-Br, Cl-I) und aliphatische, perhalogenierte Kohlenwasserstoffe (Cl₃C-CCl₃ oder BrF₂C-CF₂Br, N-Fluor-bis-(phenyl)-sulfonylamin) zur Einführung von F, Cl, Br oder I;
CO₂ zur Einführung der Carboxylgruppe -CO₂H;
Chlor- oder Bromcarbonate [Cl-C(O)-OR] zur Einführung einer Carboxylatgruppe, wobei R ein Kohlenwasserstoffrest (Alkyl, Cycloalkyl, Cycloalkyl-alkyl, Aryl, Aralkyl, Heteroaryl, Heteroaralkyl) mit 1 bis 18, bevorzugt 1 bis 12 und besonders bevorzugt 1 bis 8 C-Atomen ist, der unsubstituiert oder mit inerten Substituenten wie zum Beispiel Sekundärphosphino, Di(C₁-C₈-Alkyl)₂N-, -C(O)-OC₁-C₈-Alkyl, oder -OC₁-C₈-Alkyl substituiert ist (als inerte Substituenten werden auch reaktive Gruppen wie zum Beispiel Cl, Br oder I umfasst, wenn gleichzeitig gegenüber einem Metall oder einer Metallgruppe in Verbindungen der Formel I reaktivere Gruppen, wie zum Beispiel -CHO, vorliegen, oder wenn gleichzeitig Cl und Br, Cl und I oder Br und I in einem vorzugsweise aromatischen Kohlenwasserstoffrest gebunden sind); Di-(C₁-C₄Alkyl)formamide, zum Beispiel Dimethylformamid oder Diethylformamid, zur Einführung der Gruppe -CH(O);
Di-(C₁-C₄-Alkyl)carbonsäureamide zur Einführung einer Gruppe -C(O)-R;
gegebenenfalls in der Gruppe R mit Sekundärphosphino substituierte Aldehyde zur Einführung einer Gruppe -CH(OH)-R oder Paraformaldehyd zur Einführung der Gruppe -CH₂OH; gegebenenfalls in der der Gruppe R oder Rₐ mit Sekundärphosphino substituierte symmetrische oder unsymmetrische Ketone zur Einführung einer Gruppe -C(OH)RRₐ, worin Rₐ unabhängig die gleiche Bedeutung wie R hat, oder R und Rₐ zusammen einen cycloaliphatischen Ring mit 3 bis 8 Ringgliedern bildet;
Epoxide zur Einführung einer Gruppe -C-C-OH, in der die C-Atome mit H oder R substituiert sein können;
Eschenmosersalz der Formel (CH₃)₂N⁺=CH₂xl⁻.
Imine R-CH=N- Rₐ zur Einführung der Gruppe -CH(R)-NH Rₐ, worin Rₐ unabhängig die gleiche Bedeutung wie R hat, oder R und Rₐ zusammen einen cycloaliphatischen Ring mit 3 bis 8 Ringgliedern bildet; R und Rₐ sind nicht gleichzeitig Wasserstoff,
Imine R-C(R_{b})=N-Rₐ zur Einführung der Gruppe -C(R)(R_{b})-NH Rₐ, worin Rₐ unabhängig die gleiche Bedeutung wie R hat, oder R und R' zusammen einen cycloaliphatischen Ring mit 3 bis 8 Ringgliedern bildet, R_{b} unabhängig die Bedeutung von R hat, oder R und R_{b} zusammen einen cycloaliphatischen Ring mit 3 bis 8 Ringgliedern bildet;
Kohlenwasserstoff- und Heterokohlenwasserstoffmonohalogenide, besonders -chloride, -bromide und -iodide zur Einführung von Kohlenwasserstoff- und Heterokohlenwasserstoffresten (zum Beispiel C₁-C₁₈-Alkyl, C₈-C₁₄-Aryl, C₇-C₁₄-Aralkyl);
Halogenkohlenwasserstoffe und Halogenheterokohlenwasserstoffe mit unterschiedlich reaktiven Halogenatomen, besonders Kombinationen von Chlor mit Brom oder lod, Brom mit lod oder zwei Brom- oder lodatomen, zur Einführung von Kohlenwasserstoff- und Heterokohlenwasserstoffresten (zum Beispiel C₁-C₁₈-Alkyl, C₆-C₁₄-Aryl, C₇-C₁₄-Aralkyl);
Alkenylhalogenide, besonders -chloride, -bromide und -iodide, zur Einführung von Alkenylgruppen wie zum Beispiel Allyl und Vinyl;
Tri-(C₁ C₈-Alkyl)silylhalogenide (Chloride, Bromide) zur Einführung der Gruppe Tri-(C₁-C₈-Alkyl)-Si-, Triphenylsilylhalogenide zur Einführung der Gruppe Triphenylsilyl;
Phosphorsäureestermonohalogenide (Chloride, Bromide) zur Einführung von Phosphonsäureestergruppen wie zum Beispiel (CH₃O)₂(O)P-, (C₂H₅O)(O)P-, (CyclohexylO)₂(O)P-, (Ethylendioxyl)(O)P-;
Phosphorsäurethioestermonohalogenide (Chloride, Bromide) zur Einführung von Phosphonthiosäureestergruppen wie zum Beispiel (CH₃O)₂(S)P-, (C₂H₅O)(S)P-, (CyclohexylO)₂(S)P-, (Ethylendioxyl)(S)P-;
organische Disulfide R-SS-R zur Einführung der Gruppe -SR; und
Schwefel (S₈) zur Einführung der Gruppe -SH.

Bei den nachfolgend beschriebenen Verfahren ist jeweils nur eines der möglichen Stereoisomeren als Strukturformel dargestellt. Der Fachmann kennt die anderen Stereoisomeren.

Zur Einführung von Substituenten in die 3- und 3'-Positionen der cp-Ringe kann man von bekannten und teilweise käuflichen Mandyphos-Liganden ausgehen, die man mit zum Beispiel
a) organischen Peroxiden zu entsprechenden Phosphinoxiden vorzugsweise der Formel II 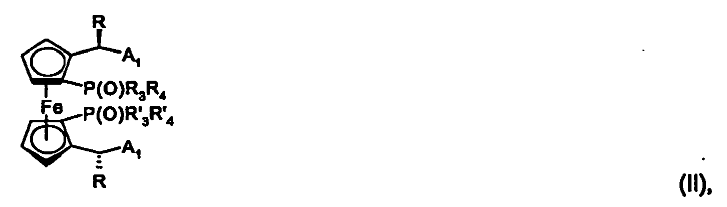 umsetzt, worin R, R₃ und R₄ die zuvor angegebenen Bedeutungen, und R'₃ und R'₄ unabhängig die gleiche Bedeutung wie R₃ und R₄ haben, und A₁ für Sekundäramino steht,
b) die Verbindungen der Formel II vorzugsweise lithiiert und dann durch Umsetzung mit einem Sektrophil die Reste R₁ und R₂ in den 3- und 3'-Positionen einführt unter Bildung von Verbindungen der Formel III, 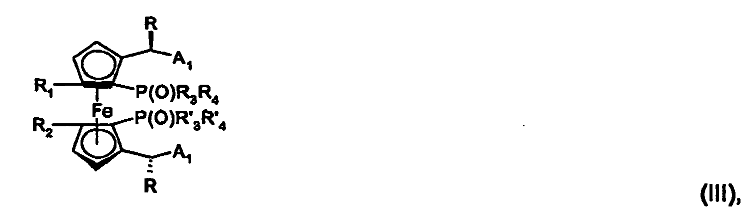 und
c) die Verbindung der Formel III zu Verbindungen der Formel I reduziert. Die eingeführten Substituenten müssen gegenüber den Reduktionsbedingungen inert sein.

Die Oxidation gemäss Verfahrensstufe a) wird vorteilhaft in Lösungsmitteln (solchen wie schon zuvor genannt) und bei Temperaturen von etwa -30 bis 50 °C durchgeführt Die Reaktionsbedingungen der Verfahrensstufe b) sind analog zu den zuvor beschriebenen Bedingungen. Die Reduktion gemäss Verfahrensstufe c) kann katalytisch oder mit chemischen Hydrierreagenzien erfolgen, zum Beispiel mit Metallhydriden [Li(AlH₄)], Alkyl- oder Alkoxyboranen, Alkyl- oder Alkoxysilanen oder Alkyl- oder Alkoxystannanen gegebenenfalls zusammen mit Lewissäuren wie zum Beispiel Metallalkoholaten (Titantetraalkoholaten). Die Reaktion wird zweckmässig in Gegenwart von Lösungsmitteln und bei Temperaturen von 0 bis 150 °C durchgeführt, je nach Reaktivität des Hydrierungsreagenzes.

Substitutionen in den 5- und 5'-Positionen gelingen dann besonders gut, wenn R in Verbindungen der Formel I für Wasserstoff oder einen Substituenten steht und zusätzlich im Rest A₁ ein O- oder N-haltiger Substituent gebunden ist, der das Metall bei der Metallierung in die 5- und 5'-Positionen dirigiert.

Gegenstand der Erfindung ist ein Verfahren zur Herstellung von Verbindungen der Formel la 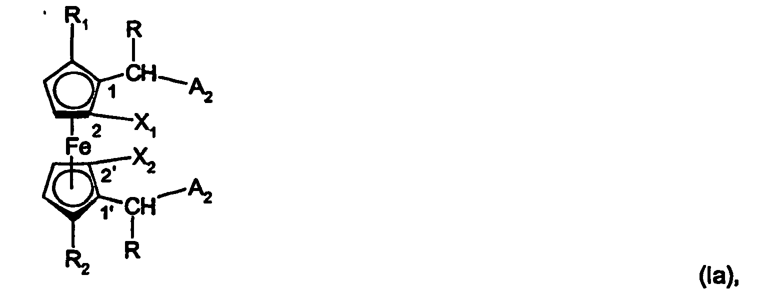 worin R, X₁, X₂, R₁ und R₂ die zuvor angegebenen Bedeutungen haben, wobei R₂ Wasserstoff ist, wenn R ungleich Wasserstoff ist, A₂ offenkettiges oder zyklisches Sekundäramino mit wenigstens einem asymmetrischen C-Atom darstellt, wenn R Wasserstoff bedeutet, oder A₂ offenkettiges oder zyklisches, achirales oder chirales Sekundäramino darstellt, das mit Di-(C₁-C₄-Alkyl)amino oder C₁-C₄-Alkoxy substituiert ist, wenn R ungleich Wasserstoff ist, das dadurch gekennzeichnet ist, dass man eine Verbindung der Formel IV 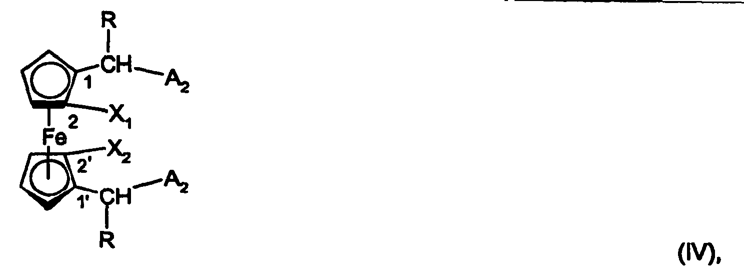 mit ein oder wenigstens zwei Äquivalenten Metallierungsreagenz, bevorzugt Lithiumalkyl, entweder nur in der 5-Stellung oder in den 5- und 5'-Stellungen metalliert, und dann mit Elektrophilen zur Einführung der Gruppen R₁ und R₂ umsetzt.

Die Verbindungen der Formel IV sind zum einen wertvolle Zwischenprodukte für das erfindungsgemässe Verfahren und zum anderen wertvolle Liganden für homogene Katalysatoren der Übergangsmetalle. Die Verbindungen der Formel IV, worin R Wasserstoff, oder unsubstituiertes oder mit F, Cl, OH, C₁-C₄-Alkyl oder C₁-C₄-Alkoxy substituiertes C₁-C₈-Alkyl, C₃-C₈-Cycloalkyl, C₆-C₁₀-Aryl oder C₇-C₁₁-Aralkyl bedeutet; A₂ offenkettiges oder zyklisches Sekundäramino mit wenigstens einem asymmetrischen C-Atom darstellt. sind ein weiterer Gegenstand der Erfindung.

Die Verfahrensbedingungen sind schon zuvor beschrieben worden und in den Beispielen näher ausgeführt Da die Metallierung im Schritt a) stufenweise vorgenommen werden kann, wenn R für Wasserstoff steht, können mit diesem Verfahren neben mono- und disubstituierten Verbindungen auch solche mit unterschiedlichen Substituenten hergestellt werden.

A₂ kann als offenkettige oder zyklische Sekundäraminogruppe der Formel R₅R₆N- entsprechen, worin R₅ und R₆ unabhängig voneinander C₁-C₁₂-Alkyl und bevorzugt C₁-C₆-Alkyl, C₃-C₈-Cycloalkyl und bevorzugt C₅-C₆-Cycloalkyl darstellen, oder zusammen mit dem N-Atom einen 3 bis 8-gliedrigen und bevorzugt 5- bis 8-gliedrigen N-heterozyklischen Ring bilden, und wenigstens eines von R₅ und R₆ sowie der heterozyklische gegebenenfalls einen O-oder N-haltigen Substituenten enthalten.

Beispiele für Alkyl, das bevorzugt linear ist, sind Methyl, Ethyl, Propyl ,Butyl, Pentyl, Hexyl, Heptyl und Octyl. und. Beispiele für Cycloalkyl sind Cyclopentyl, Cyclohexyl und Cyclooctyl. Beispiele für Cycloalkyl sind besonders Cyclopentyl und Cyclohexyl. R₅ und R₆ sind zusammen bevorzugt Tetramethylen,-Pentamethylen,-3-Oxapentylen oder 3-(C₁-C₄-Alkyl)N-pentylen, wenn das Sekundäramino einen N-heterozyklischen Ring bildet. Geeignete Substituenten sind zum Beispiel C₁-C₄-Alkoxy, C₁-C₄-Alkoxymethyl, C₁-C₄-Alkoxyethyl, (C₁-C₄-Alkyl)₂N-, (C₁-C₄-Alkyl)₂N-methyl und (C₁-C₄-Alkyl)₂N-ethyl. Die Substituenten befinden sich zum Beispiel in γ-Stellung und bevorzugt den α- beziehungsweise β-Stellungen zum N-Atom der Sekundäraminogruppe. R₅ und R₆ können zusätzlich mit C₁-C₄-Alkyl, C₅-C₆-Cycloalkyl, Phenyl oder Benzyl substituiert sein.

In einer bevorzugten Ausführungsform stellen R₅ und R₆ Methyl, Ethyl, Cyclohexyl oder R₅ und R₆ zusammen Tetramethylen, Pentamethylen oder 3-Oxapentylen dar, die mit C₁-C₄-Alkoxy, C₁-C₄-Alkoxymethyl, C₁-C₄-Alkoxyethyl, (C₁-C₄-Alkyl)₂N-, (C₁-C₄-Alkyl)₂N-methyl und (C₁-C₄-Alkyl)₂N-ethyl und gegebenenfalls zusätzlich mit C₁-C₄ Alkyl, C₅-C₆-Cycloalkyl, Phenyl oder Benzyl substituiert sind.

Besonders bevorzugte Beispiele sind solche der Formeln 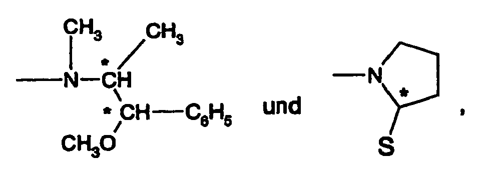 worin S C₁-C₄-Alkoxy, C₁-C₄-Alkoxymethyl, C₁-C₄-Alkoxyethyl, (C₁-C₄-Alkyl)₂N-, (C₁-C₄-Alkyl)₂N-methyl oder (C₁-C₄-Alkyl)₂N-ethyl ist.

Verbindungen der Formeln IV sind in einfacher Weise aus Verbindungen der Formel V erhältlich, 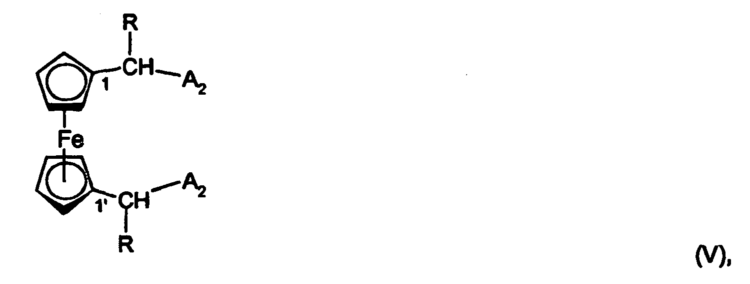 indem man diese metalliert und dann mit Sekundärphosphinhalogeniden umsetzt. Verbindungen der Formel V sind erhältlich durch Substitution entsprechender Acetoxy- oder Aminverbindungen beziehungsweise deren Salzen mit Aminen A₂H.

Andere Diastereomere zum gemäss obigen Verfahren erhaltenen Diastereomeren der Formel lb 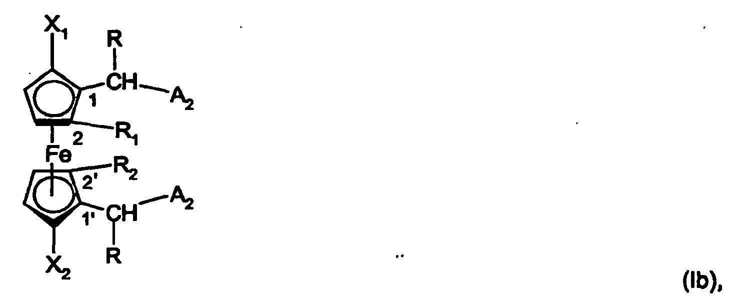 kann man über eine Änderung der Reaktionssequenz herstellen, bei dem man eine metallierte (lithiierte) Verbindung der Formel V zuerst mit einem Elektrophil zur Einführung der Reste R₁ und R₂ umsetzt, dann erneut metalliert (lithiiert) und dann mit Sekundärphosphinhalogeniden umsetzt.

Verbindungen der Formel I, worin die 3,3',5,5'-Positionen substituiert sind, können ebenfalls ausgehend von Verbindungen der Formel V erhalten werden,
a) indem man indem man diese metalliert (lithiiert) und dann zu Verbindugen der Formel VI halogeniert, 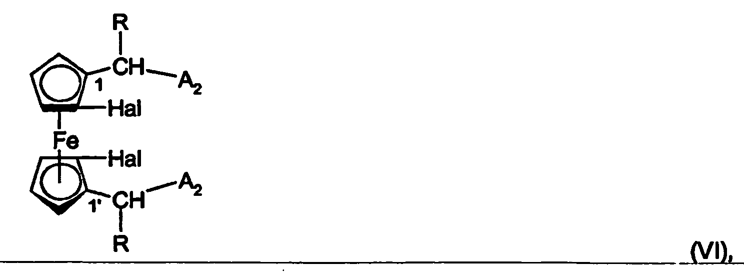 worin Hal für Cl, Br oder I und bevorzugt für Br steht,
b) die Verbindungen der Formel VI mit einem sekundären Lithiumamid metalliert und dann mit einem Elektrophil zur Einführung der Reste R₁ und R₂ zu Verbindungen der Formel VII umsetzt, 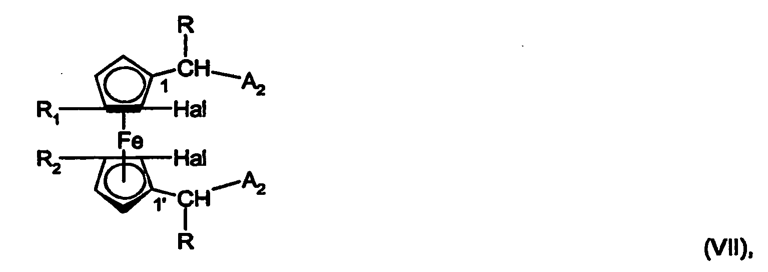
c) die Verbindungen der Formel VII metalliert (lithiiert) und dann mit Sekundärphosphinhalogeniden zu Verbindungen der Formel VIII umsetzt, 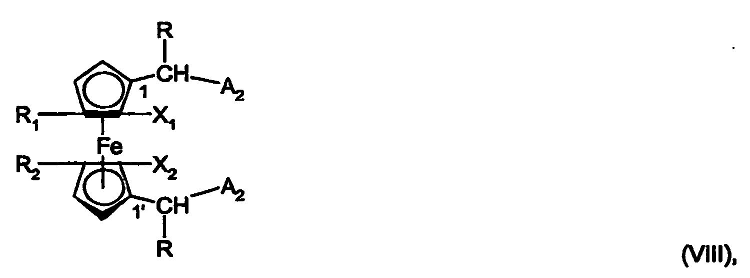 die Verbindungen der Formel VIII metalliert (lithiiert) und dann mit einem Elektrophil zur Einführung der Reste R₁ und R₂ zu Verbindungen der Formel IX umsetzt, 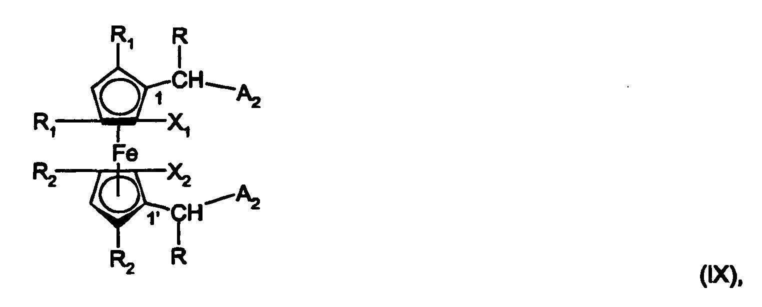
wobei die beiden R₁ und die beiden R₂ gleiche oder verschiedene Reste darstellen können.

In den 4- und 4'-Stellungen substituierte Verbindungen der Formel I sind aus Verbindungen der Formel IV erhältlich,
a) indem man diese metalliert (lithiiert) und dann zu Verbindungen der Formel X halogeniert (Hal bedeutet Cl, Br oder I), bevorzugt bromiert (Hal gleich Br), 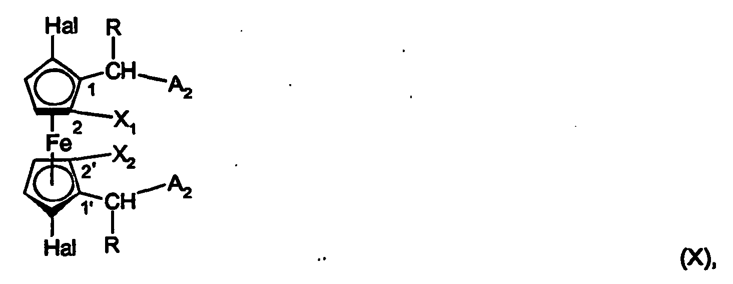
b) die Verbindungen der Formel X mit einem sekundären Lithiumamid lithiiert und dann mit einem Elektrophil zur Einführung der Reste R₁ und R₂ zu Verbindungen der Formel XI umsetzt, 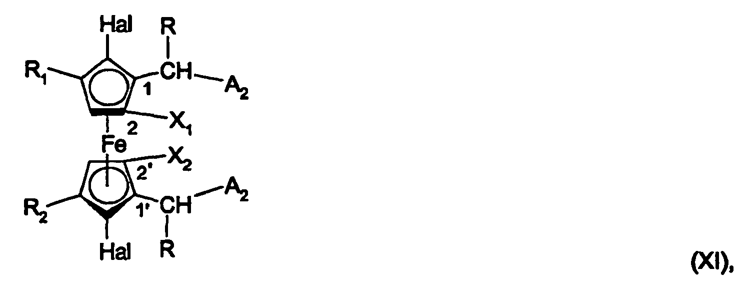
c) und in den Verbindungen der Formel XI gegebenenfalls die Halogenatome durch Umsetzung mit Lithiumalkyl mit Lithium ersetzt werden, um dann durch hydrolytische Abspaltung mit Wasser Hal durch Waserstoff zu ersetzen, oder mit einem Elektrophil zur Einführung der Reste R₁ und R₂ umsetzt, wobei die beiden R₁ und die beiden R₂ gleiche oder verschiedene Reste darstellen können.

In den erfindungsgemässen Verbindungen der Formel I kann die sekundäre Amingruppe A₁ (A₁ kann auch die Bedeutung von A₂ haben) weiter modifiziert werden, indem man zum Beispiel in an sich bekannter Weise mit Essigsäureanhydrid die Gruppe A₁ durch Acetoxy ersetzt. Die Acetoxygruppe kann zur Bildung einer Hydroxylgruppe hydrolysiert, oder gegen beliebige Alkohole R₃OH beziehungsweise Amine ausgetauscht werden. Die Hydroxylverbindungen können auch verestert oder verethert werden. Solche Verfahren sind in der Literatur beschrieben, siehe zum Beispiel T. Hayashi et al., Bull. Chem. Soc. Jpn. 53 (1980), Seiten 1138 bis 1151.

Die erfindungsgemässen Metallkomplexe stellen homogene Katalysatoren oder unter den Reaktionsbedingungen aktivierbare Katalysatorvorläufer dar, die für asymmetrische Additionsreaktionen an prochirale, ungesättigte, organische Verbindungen eingesetzt werden können, siehe E. Jacob-sen, A. Pfaltz, H. Yamamoto (Eds.), Comprehensive Asymmetric Catalysis 1 bis 111, Springer Verlag, Berlin, 1999, und B. Comils et al., in Applied Homogeneous Catalysis with Organometallic Compounds, Volume 1, Second Edition, Wiley VCH-Verlag (2002).

Die erfindungsgemässen Verbindungen der Formel I, l' und IV sind Liganden für Metallkomplexe ausgewählt aus der Gruppe der TM8-Metalle, besonders aus der Gruppe Ru, Rh und Ir, die hervorragende Katalysatoren oder Katalysatorvorläufer für asymmetrische Synthesen, zum Beispiel die asymmetrische Hydrierung von prochiralen, ungesättigten, organischen Verbindungen darstellen. Werden prochirale ungesättigte organische Verbindungen eingesetzt, kann ein sehr hoher Überschuss optischer Isomerer bei der Synthese organischer Verbindungen induziert und ein hoher chemischer Umsatz in kurzen Reaktionszeiten erzielt werden. Die erzielbaren Enantioselektivitäten und Katalysatoraktivitäten sind ausgezeichnet und bei einer asymmetrischen Hydrierung erheblich höher als im Vergleich zu den bekannten, eingangs erwähnten "Kagan-Liganden". Ferner können solche Liganden auch in anderen asymmetrischen Anlagerungs- oder Zyklisierungsreaktionen eingesetzt werden.

Ein weiterer Gegenstand der Erfindung sind Metallkomplexe von Metallen ausgewählt aus der Gruppe der TM8-Metalle mit einer der Verbindungen der Formel I oder l' oder IV als Liganden.

Als Metalle kommen zum Beispiel Cu, Ag, Au, Ni, Co, Rh, Pd, Ir, Ru und Pt in Frage. Bevorzugte Metalle sind Rhodium und Iridium sowie Ruthenium, Platin und Palladium.

Besonders bevorzugte Metalle sind Ruthenium, Rhodium und Iridium.

Die Metallkomplexe können je nach Oxidationszahl und Koordinationszahl des Metallatoms weitere Liganden und/oder Anionen enthalten. Es kann sich auch um kationische Metallkomplexe handeln. Solche analoge Metallkomplexe und deren Herstellung sind vielfach in der Literatur beschrieben.

Die Metallkomplexe können zum Beispiel den allgemeinen Formeln XII und XIII entsprechen,

A₃MeL, (XII),

(A₃MeLᵣ)^{(z+)}(E⁻)_{z} (XIII),

worin A₃ für eine der Verbindungen der Formeln I oder I' oder IV steht,
L für gleiche oder verschiedene monodentate, anionische oder nicht-ionische Liganden steht, oder L für gleiche oder verschiedene bidentate, anionische oder nicht-ionische Liganden steht;
r für 2, 3 oder 4 steht, wenn L einen monodentaten Liganden bedeutet oder n für 1 oder 2 steht, wenn L einen bidentaten Liganden bedeutet;
z für 1, 2 oder 3 steht;
Me ein Metall ausgewählt aus der Gruppe Rh, Ir und Ru bedeutet; wobei das Metall die Oxidationsstufen 0, 1, 2, 3 oder 4 aufweist;
E⁻ das Anion einer Sauerstoffsäure oder Komplexsäure ist; und
die anionischen Liganden die Ladung der Oxidationsstufen 1, 2, 3 oder 4 des Metalls ausgleichen.

Für die Verbindungen der Formeln I und I' gelten die zuvor beschriebenen Bevorzugungen und Ausführungsformen.

Monodentate nicht-ionische Liganden können zum Beispiel ausgewählt sein aus der Gruppe der Olefine (zum Beispiel Ethylen, Propylen), solvatisierenden Lösungsmitteln (Nitrile, lineare oder cyclische Ether, gegebenenfalls N-alkylierte Amide und Lactame, Amine, Phosphine, Alkohole, Carbonsäureester, Sulfonsäurester), Stickstoffmonoxid und Kohlenmonoxid.

Geeignete mehrzähnige anionische Liganden sind zum Beispiel Allyle (Allyl, 2-Methallyl), Cyclopentadienyl oder deprotonierte 1,3-Diketoverbindungen wie zum Beispiel Acetylacetonat.

Monodentate anionische Liganden können zum Beispiel ausgewählt sein aus der Gruppe Halogenid (F, Cl, Br, I), Pseudohlogenid (Cyanid, Cyanat, Isocyanat) und Anionen von Carbonsäuren, Sulfonsäuren und Phosphonsäuren (Carbonat, Formiat, Acetat, Propionat, Methylsulfonat, Trifluormethylsulfonat, Phenylsulfonat, Tosylat).

Bidentate nicht-ionische Liganden können zum Beispiel ausgewählt sein aus der Gruppe der linearen oder cyclischen Diolefine (zum Beispiel Hexadien, Cycloctadien, Norbomadien), Dinitrile (Malondinitril), gegebenenfalls N-alkylierte Carbonsäurediamide, Diaminen, Diphosphinen, Diolen, Dicarbonsäurediester und Disulfonsäurediester.

Bidentate anionische Liganden können zum Beispiel ausgewählt sein aus der Gruppe der Anionen von Dicarbonsäuren, Disulfonsäuren und Diphosphonsäuren (zum Beispiel von Oxalsäure, Malonsäure, Bernsteinsäure, Maleinsäure, Methylendisulfonsäure und Methylendiphosphonsäure).

Bevorzugte Metallkomplexe sind auch solche, worin E für -Cl⁻, -Br⁻, -I⁻, ClO₄⁻, CF₃SO₃⁻ , CH₃SO₃⁻, HSO₄⁻, (CF₃SO₂)₂N⁻, (CF₃SO₂)₃C⁻, Tetraarylborate wie zum Beispiel B(Phenyl)₄⁻, B[Bis(3,5-triflomethyl)phenyl]₄⁻, B[Bis(3,5-dimethyl)phenyl]₄⁻, B(C₈F₅)₄⁻ und B(4-Methylpheml)₄⁻, BF₄⁻, PF₆⁻, SbCl₆⁻, AsF₆⁻ oder SbF₆⁻ steht.

Insbesondere bevorzugte Metallkomplexe, die besonders für Hydrierungen geeignet sind, entsprechen den Formeln XIV und XV,

[A₃Me₂Y₁Z] (XIV),

[A₃Me₂Y₁]⁺E₁⁻ (XV),

worin
A₃ für eine der Verbindungen der Formeln I oder I' oder IV steht;
Me₂ Rhodium oder Iridium bedeutet;
Y₁ für zwei Olefine oder ein Dien steht;
Z Cl, Br oder bedeutet; und
E₁⁻ das Anion einer Sauerstoffsäure oder Komplexsäure darstellt.

Für die Verbindungen der Formeln I und I' gelten die zuvor beschriebenen Ausführungsformen und Bevorzugungen.

Bei Y₁ in der Bedeutung als Olefin kann es sich um C₂-C₁₂-, bevorzugt C₂-C₈- und besonders bevorzugt C₂-C₄-Olefine handeln. Beispiele sind Propen, But-1-en und besonders Ethylen. Das Dien kann 5 bis 12 und bevorzugt 5 bis 8 C-Atome enthalten und es kann sich um offenkettige, cyclische oder polycyclische Diene handeln. Die beiden Olefingruppen des Diens sind bevorzugt durch ein oder zwei CH₂-Gruppen verbunden. Beispiele sind 1,4-Pentadien, Cyclopentadien, 1,5-Hexadien, 1,4-Cydohexadien, 1,4- oder 1,5-Heptadien, 1,4- oder 1,5-Cycloheptadien, 1,4- oder 1,5-Octadien, 1,4- oder 1,5-Cyclooctadien und Norbomadien. Bevorzugt stellt Y zwei Ethylen oder 1,5- Hexadien, 1,5-Cyclooctadien oder Norbomadien dar.

In Formel IX steht Z bevorzugt für Cl oder Br. Beispiele für E₁ sind BF₄⁻, ClO₄⁻, CF₃SO₃⁻, CH₃SO₃⁻, HSO₄⁻, B(Phenyl)₄⁻, B[Bis(3,5-trifluormethyl)phenyl]₄⁻, PF₆⁻, SbCl₆⁻, AsF₆⁻ oder SbF₆⁻.

Die erfindungsgemässen Metallkomplexe werden nach in der Literatur bekannten Methoden hergestellt (siehe auch US-A-5,371,256, US-A-5,446,844, US-A-5,583,241, und E. Jacobsen, A. Pfaltz, H. Yamamoto (Eds.), Comprehensive Asymmetric Catalysis I bis III, Springer Verlag, Berlin, 1999, und darin zitierte Literatur).

Rutheniumkomplexe können zum Beispiel der Formel XVI entsprechen,

[RuₐH_{b}Z_{c}(A₃)_{d}Lₑ]_{f}(E^{k})_{g}(S)ₕ (XVI),

worin
Z Cl, Br oder I bedeutet A₃ für eine Verbindung der Formeln I oder I' oder IV steht; L für gleiche oder verschiedene Liganden steht; E⁻ das Anion einer Sauerstoffsäure, Mineralsäure oder Komplexsäure ist; S für ein koordinationsfähiges Lösungsmittel als Ligand steht; und a 1 bis 3, b 0 bis 4, c 0 bis 6, d 1 bis 3, e 0 bis 4, f 1 bis 3, g 1 bis 4, h 0 bis 6 und k 1 bis 4 bedeuten, wobei die Gesamtladung des Komplexes neutral ist.

Für die Verbindungen der Formel VIII gelten die zuvor dargestellten Bevorzugungen für Z, A₃, L und E⁻. Bei den Liganden L kann es sich zusätzlich um Arene oder Heteroarene (zum Beispiel Benzol, Naphthalin, Methylbenzol, Xylol, Cumol, 1,3,5-Mesitylen, Pyridin, Biphenyl, Pyrrol, Benzimidazol oder Cyclopentadienyl) und Metallsalze mit Lewissäurefunktion (zum Beispiel ZnCl₂, AlCl₃, TiCl₄ und SnCl₄) handeln. Bei den Lösungsmittelliganden kann es sich zum Beispiel um Alkohole, Amine, Säureamide, Lactame und Sulfone handeln.

Komplexe dieser Art sind in der nachfolgend erwähnten Literatur und der darin zitierten Literatur beschrieben:
D. J. Ager, S. A. Laneman, Tetrahedron: Asymmetry, 8, 1997, 3327 - 3355;
T. Ohkuma, R. Noyori in Comprehensive Asymmetric Catalysis (E.N. Jacobsen, A. Pfaltz, H. Yamamoto, Eds.), Springer, Berlin, 1999, 199-246;
J. M. Brown in Comprehensive Asymmetric Catalysis (E.N. Jacobsen, A. Pfaltz, H. Yamamoto, Eds.), Springer, Berlin, 1999, 122 - 182;
T. Ohkuma, M. Kitamura, R. Noyori in Catalytic Asymmetric Synthesis, 2nd Edition (I. Ojima, Ed.), Wiley-VCH New York, 2000, 1-110;
N. Zanetti, et al. Organometallics 15, 1996, 860.

Die erfindungsgemässen Metallkomplexe stellen homogene Katalysatoren oder unter den Reaktionsbedingungen aktivierbare Katalysatorvorläufer dar, die für asymmetrische Additionsreaktionen an prochirale, ungesättigte, organische Verbindungen eingesetzt werden können.

Die Metallkomplexe können zum Beispiel zur asymmetrischen Hydrierung (Addition von Wasserstoff) von prochiralen Verbindungen mit Kohlenstoff/Kohlenstoff- oder Kohlenstoff/Heteroatomdoppeibindungen verwendet werden. Derartige Hydrierungen mit löslichen homogenen Metallkomplexen sind zum Beispiel in Pure and Appl. Chem., Vol. 68, No. 1, Seiten 131-138 (1996) beschrieben. Bevorzugte zu hydrierende ungesättigte Verbindungen enthalten die Gruppen C=C, C=N und/oder C=O. Für die Hydrierung werden erfindungsgemäss bevorzugt Metallkomplexe von Ruthenium, Rhodium und Iridium verwendet.

Ein weiterer Gegenstand der Erfindung ist die Verwendung der erfindungsgemässen Metallkomplexe als homogene Katalysatoren zur Herstellung chiraler organischer Verbindungen, bevorzugt zur asymmetrischen Anlagerung von Wasserstoff an eine Kohlenstoff- oder Koh-Ienstoff-Heteroatomdoppelbindung in prochiralen organischen Verbindungen.

Ein weiterer Aspekt der Erfindung ist ein Verfahren zur Herstellung chiraler organischer Verbindungen durch asymmetrische Anlagerung von Wasserstoff an eine Kohlenstoff- oder Kohlenstoff-Heteroatomdoppelbindung in prochiralen organischen Verbindungen in Gegenwart eines Katalysators, das dadurch gekennzeichnet ist, dass man die Anlagerung in Gegenwart katalytischer Mengen wenigstens eines erfindungsgemässen Metallkomplexes durchführt.

Bevorzugte zu hydrierende prochirale, ungesättigte Verbindungen können ein oder mehrere, gleiche oder verschiedene Gruppen C=C, C=N und/oder C=O, in offenkettigen oder cyclischen organischen Verbindungen enthalten, wobei die Gruppen C=C, C=N und/oder C=O Teil eines Ringsystems sein können oder exocyclische Gruppen darstellen. Bei den prochiralen ungesättigten Verbindungen kann es sich um Alkene, Cycloalkene, Heterocycloalkene, sowie um offenkettige oder cyclische Ketone, α,β-Diketone, α- oder β-Ketocarbonsäuren sowie deren , α,β-Ketoacetale oder -ketale, Ester und Amide, Ketimine und Kethydrazone handeln.

Einige Beispiele für ungesättigte organische Verbindungen sind Acetophenon, 4-Methoxyacetophenon, 4-Tri-fluormethylacetophenon, 4-Nitroacetophenon, 2-Chloracetophenon, entspechende gegebenenfalls N-substituierte Acetophenonbenzylimine, unsubstituiertes oder substituiertes Beozocyclohexanon oder Benzocydopentanon und entsprechende Imine, Imine aus der Gruppe unsubstituiertes oder substituiertes Tetrahydrochinolin, Tetrahyropyridin und Dihydropyrrol, und ungesättigte Carbonsäuren, ester, -amide und -salze wie zum Beispiel α- und gegebenfalls β-substituierte Acrylsäuren oder Crotonsäuren. Bevorzugte Carbonsäuren sind solche der Formel

R₀₁-CH=C(R₀₂)-C(O)OH

sowie ihre Salze, Ester und Amide, worin R₀₁, C₁-C₆-Alkyl, unsubstituiertes oder mit 1 bis 4 C₁-C₆-Alkyl, C₁-C₆-Alkoxy, C₁-C₈-Alkoxy-C₁-C₄-alkoxy substituiertes C₃-C₈-Cycloalkyl, oder unsubstituiertes oder mit 1 bis 4 C₁-C₆-Alkyl, C₁-C₆-Alkoxy, C₁-C₆-Alkoxy-C₁-C₄-alkoxy substituiertes C₆-C₁₀-Aryl und bevorzugt Phenyl darstellt, und R₀₂ lineares oder verzweigtes C₁-C₆-Alkyl (zum Beispiel Isopropyl), unsubstituiertes oder wie zuvor definiert substituiertes Cyclopentyl, Cyclohexyl, Phenyl oder geschütztes Amino (zum Beispiel Acetylamino) bedeutet.

Das erfindungsgemässe Verfahren kann bei tiefen oder erhöhten Temperaturen, zum Beispiel Temperaturen von -20 bis 150 °C, bevorzugt von -10 bis 100 °C, und besonders bevorzugt von 10 bis 80 °C durchgeführt werden. Die optischen Ausbeuten sind im allgemeinen bei tieferer Temperatur besser als bei höheren Temperaturen.

Das erfindungsgemässe Verfahren kann bei Normaldruck oder Überdruck durchgeführt werden. Der Druck kann zum Beispiel von 10⁶ bis 2x10⁷ Pa (Pascal) betragen. Hydrierungen können bei Normaldruck oder bei Überdruck durchgeführt werden.

Katalysatoren werden bevorzugt in Mengen von 0,0001 bis 10 Mol-%, besonders bevorzugt 0,001 bis 10 Mol-%, und insbesondere bevorzugt 0,01 bis 5 Mol-% verwendet, bezogen auf die zu hydrierende Verbindung.

Die Herstellung der Liganden und Katalysatoren sowie die Hydrierung kann ohne oder in Gegenwart eines inerten Lösungsmittels durchgeführt werden, wobei ein Lösungsmittel oder Gemische von Lösungsmitteln eingesetzt werden können. Geeignete Lösungsmittel sind zum Beispiel aliphatische, cycloaliphatiche und aromatische Kohlenwasserstoffe (Pentan, Hexan, Petrolether, Cyclohexan, Methylcyclohexan, Benzol, Toluol, Xylol), aliphatische Halogenkohlenwasserstoffe (Methylenchlorid, Chloroform, Di- und Tetrachlorethan), Nitrile (Acetonitril, Propionitril, Benzonitril), Ether (Diethylether, Dibutylether, t-Butylmethylether, Ethylenglykoldimethylether, Ethylenglykoldiethylether, Diethylenglykoldimethylether, Tetrahydrofuran, Dioxan, Diethylenglykolmonomethyl- oder monoethyether), Ketone (Aceton, Methylisobutylketon), Carbonsäureester und Lactone (Essigsäureethyl- oder -methylester, Valerolacton), N-substituierte Lactame (N-Methylpyrrolidon), Carbonsäureamide (Dimethylamid, Dimethylformamid), acyclische Harnstoffe (Dimethylimidazolin), und Sulfoxide und Sulfone (Dimethylsulfoxid, Dimethylsulfon, Tetramethylensulfoxid, Tetramethylensulfon) und Alkohole (Methanol, Ethanol, Propanol, Butanol, Ethylenglykolmonomethylether, Ethylenglykolmonoethylether, Diethylenglykolmonomethylether) und Wasser. Die Lösungsmittel können alleine oder in Mischung von wenigstens zwei Lösungsmitteln verwendet werden.

Die Reaktion kann in Gegenwart von Cokatalysatoren durchgeführt werden, zum Beispiel quaternären Ammoniumhalogeniden (Tetrabutylammoniumiodid) und/oder in Gegenwart von Protonensäuren, zum Beispiel Mineralsäuren, durchgeführt werden (siehe zum Beispiel US-A-5,371,256, US-A-5,446,844 und US-A-5,583,241 und EP-A-0 691 949). Die Gegenwart fluorierter Alkohole wie zum Beispiel 1,1,1-Trifluorethanol kann ebenfalls die katalytische Reaktion begünstigen.

Die als Katalysatoren verwendeten Metallkomplexe können als getrennt hergestellte isolierte Verbindungen zugegeben werden, oder auch in situ vor der Reaktion gebildet und dann mit dem zu hydrierenden Substrat vermischt werden. Es kann vorteilhaft sein, bei der Reaktion unter Verwendung von isolierten Metallkomplexen zusätzlich Liganden zuzugeben, oder bei der in situ Herstellung einen Überschuss der Liganden einzusetzen. Der Überschuss kann zum Beispiel 1 bis 6 und vorzugsweise 1 bis 2 Mol betragen, bezogen auf die zur Herstellung verwendete Metallverbindung.

Das erfindungsgemässe Verfahren wird im allgemeinen so durchgeführt, dass man den Katalysator vorlegt und dann das Substrat, gegebenenfalls Reaktionshilfsmittel und die anzulagernde Verbindung zugibt, und danach die Reaktion startet. Gasförmige anzulagernde Verbindungen, wie zum Beispiel Wasserstoff oder Ammoniak, werden vorzugsweise aufpresst. Das Verfahren kann in verschiedenen Reaktortypen kontinuierlich oder satzweise durchgeführt werden.

Die erfindungsgemäss herstellbaren chiralen organischen Verbindungen sind aktive Substanzen oder Zwischenprodukte zur Herstellung solcher Substanzen, insbesondere im Bereich der Herstellung von Aromen und Geruchsstoffen, Pharmazeutika und Agrochemikalien.

Die nachfolgenden Beispiele erläutern die Erfindung.

### A) Herstellung von substituierten Ferrocen-diphosphinen

Abkürzungen: Me ist Methyl, Ph ist Phenyl, THF ist Tetrahydrofuran; TBME ist tert-Butylmethylether, nbd = Norbomadien;

### Beispiel A1: Methylsubstitution In 3,3'-Stellungen

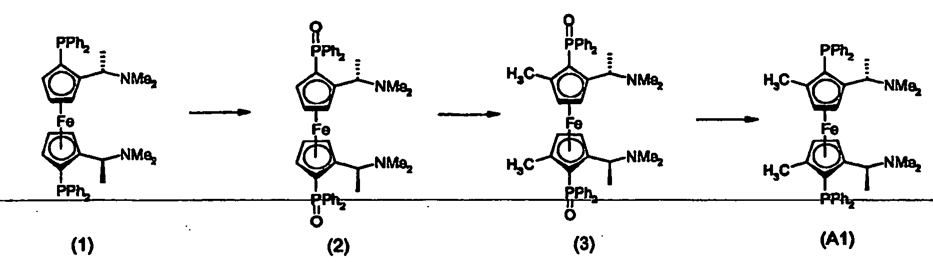

a) Herstellung von Verbindung (2)
   Zu einer Lösung von 5 g (7,2 mMol) der S,R-Verbindung (1) in 40 ml THF werden bei 0°C unter Rühren 2,6 ml (14,4 mMol) einer Lösung von t-Butyl-hydroperoxid in Nonan (5,5 Molar) getropft. Anschliessend wird die Kühlung entfernt und über Nacht weitergerührt, wobei ein gelber Niederschlag entsteht. Nach Zugabe von 40 ml Heptan wird filtriert, mit etwas kaltem Diethylether gewaschen und am Vakuum getrocknet (Ausbeute 88%). Das Rohprodukt ist rein und kann direkt weiterverwendet werden.
   ¹H-NMR (CDCl₃), charakteristische Signale: δ 7,6 - 7,4 (m, 20 H), 5.01 (m, 2H), 4,40 (m, 2H), 4,27 (m, 2H), 3,32 (m, 2H), 1,56 (s, 12H), 1,19 (d, 6H). ³¹P-NMR (CDCl₃): δ +26,3 (s).
b) Herstellung von Verbindung (3)
   Zu einer Lösung von 4 g (5,6 mMol) der Verbindung (2) in 200 ml THF werden bei -78 °C unter Rühren 10,4 ml (16,8 mMol) n-BuLi (1,6 molar in Hexan) zugetropft und das Reaktionsgemisch während 2 Stunden bei dieser Temperatur weitergerührt. Dann werden bei -78 °C 1,05 ml (16,8 mMol) Methyljodid zugetropft und das Reaktionsgemisch zuerst 0,5 Stunden bei -78 °C, dann 1 Stunde bei -40 °C und schliesslich 30 Minuten bei -10 °C weitergerührt, bevor es bei -10 °C unter intensivem Rühren mit 5 ml Wasser versetzt wird. Das organische Lösungsmittel und eventuell nicht umgesetztes Methyljodid werden sofort unter reduziertem Druck bis maximal 50 °C abdestilliert und der Rückstand in Methylenchlorid / wässrige NaCl-Lösung extrahiert. Die organischen Phasen werden gesammelt, mit Natriumsulfat getrocknet und das Lösungsmittel am Rotationsverdampfer unter reduziertem Druck abdestilliert. Das Rohprodukt fällt als oranger Feststoff an, welcher ohne weitere Reinigung weiterverwendet wird (Ausbeute > 98%).
   ¹H-NMR (C₆D₆), charakteristische Signale: δ 7,89 - 7,7 (m, 8H), 7,1-6,9 (m, 12H), 5,40 (s, 2H), 4,30 (m, 2H), 4,09 (m, 2H), 1,68 (s, 12H), 1,46 (s, 6H), 1,38 (d, 6H).³¹P-NMR (C₆D₆): 8 +27,2 (s).
c) Herstellung von Verbindung (A1):
   Eine Suspension von 390 mg (0,53 mMol) des Phosphinoxids (3) und 1,9 ml (10,5 mMol) HSi(OEt)₃ in 10 ml Toluol wird unter Rühren zum Rückfluss erhitzt. Dann werden über einen Zeitraum von 20 Minuten 0,19 ml (0,64 mMol) Titan(IV)isopropylat langsam zugetropft und das Reaktionsgemisch über Nacht weiter am Rückfluss gehalten. Nach dem Abkühlen wird das THF am Rotationsverdampfer abdestilliert, und der Rückstand in 2 ml Ethylacetat suspendiert auf eine Säule aufgetragen. Die Chromatographie (Kieselgel 60; Laufmittel= Ethylacetat mit 1% Triethylamin) liefert das gewünschte Produkt als orangen Schaum in einer Ausbeute von 73%.
   ¹H-NMR (C₆D₆), charakteristische Signale: δ 7,8 - 7,7 (m, 4H), 7,4 - 7,3 (m, 4H), 7,33 - 7,0 (m, 12H), 4,70 (s, 2H), 4,28 (m, 2H), 3,62 (m, 2H), 1,79 (s, 12H), 1,40 (s, 6H), 1,32 (d, 6H). ³¹P-NMR (C₆D₆): δ - 15,3 (s).

### Beispiel A2: Methylsubstitution in 3-Stellung

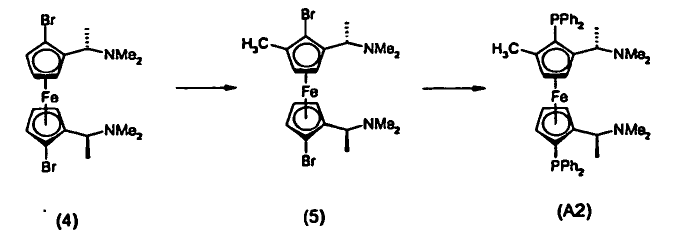

a) Herstellung der Verbindung (4)
   Die Verbindung (4) ist in der Literatur beschrieben: P. Knochel et al., Tetrahedron: Asymmetry, 10 (1999) 1839-42.
b) Herstellung der Verbindung (5)
   Folgende Lösungen werden hergestellt:
   Lösung a): Zu 0,73 ml (4,1 mmol) 2,2,6,6-Tetramethylpiperidin in 3 ml THF werden bei 0°C 2,7 ml (4 mmol) n-BuLi (1,6 m in Hexan) zugetropft und die Lösung 1 Stunde bei dieser Temperatur gerührt.
   Lösung b): 500 mg (1.03 mmol) Verbindung (4) in 3 ml THF.
   Die Lösung a) wird auf -78°C gekühlt. Unter Rühren wird die Lösung b) während 15 Minuten zugetropft und das Reaktionsgemisch zunächst 30 Minuten bei - 78°C, dann 4 h bei -30°C weitergerührt. Nach erneutem Abkühlen auf -78°C werden 0,26 ml (4 mmol) Methyljodid zugetropft und bei dieser Temperatur 2 Stunden weitergerührt. Das Reaktionsgemisch wird anschliessend mit 2 ml THF/Wasser versetzt und mit Ethylacetat / Wasser extrahiert. Die organischen Phasen werden gesammelt, mit Natriumsulfat getrocknet und das Lösungsmittel am Rotationsverdampfer abdestilliert. Nach chromatographischer Reinigung (Kieselgel 60; Laufmittel = 10 Dichlormethan / 1 Methanol mit 1% Triethylamin) wird ein Gemisch von häuptsächlich Produkt und Edukt erhalten. Da dieses Gemisch nach Umsetzen mit dem Phosphin viel besser trennbar ist, wird dieses ohne weitere Reinigung weiterverarbeitet. Eine Probe wird zur Charakterisierung des Produktes durch weitere Chromatographie gereinigt.
   ¹H-NMR (CDCl₃), charakteristische Signale: δ 2,10 (s, 6H) 2.08 (s, 6H) 1,95 (s, 3H), 1,45-1,38 (m, 2 mal 3H).
c) Herstellung der Verbindung (A2):
   Zu 340 mg des in Stufe b) erhaltenen Produktes in 5 ml Diethylether werden bei 0°C 1,3 ml (2 mmol) n-BuLi (1,6 molar in Hexan) zugetropft und das Reaktionsgemisch während 2 Stunden bei dieser Temperatur gerührt. Nach Abkühlen auf -78°C werden 510 mg Diphenyl-chlorphosphin zugegeben, das Kühlbad entfernt und über Nacht gerührt. Es wird 1 ml Wasser zugegeben, extrahiert, die organische Phase mit Natriumsulfat getrocknet und am Rotationsverdampfer eingeengt. Reinigung durch Chromatographie (Kieselgel 60; Laufmittel =1 Ethylacetat / 5 Heptan mit 1% Triethylamin) liefert 270 mg Produkt als orangen Feststoff.
   ¹H-NMR (C₆D₆), charakteristische Signale: δ 7.91 - 7,75 (m, 4H), 7,51 - 7,37 (m, 4H), 7,23 - 7,06 (m, 12H) 4,74 (s, 1 H), 4,43 - 4,25 (m, 2H), 4,35 (m, 1 H), 4,13 (m, 1 H), 4,10 (m, 1 H), 3,73 (m, 1 H), 1,93 (s, 6H), 1,83 (s, 6H) 1,50-1,43 (m, 6H), 1,18 (d, 3H). ³¹P-NMR (C₆D₆): δ -16,3, -23,2.

### Beispiel A3: Methylsubstitution in 5-Stellung

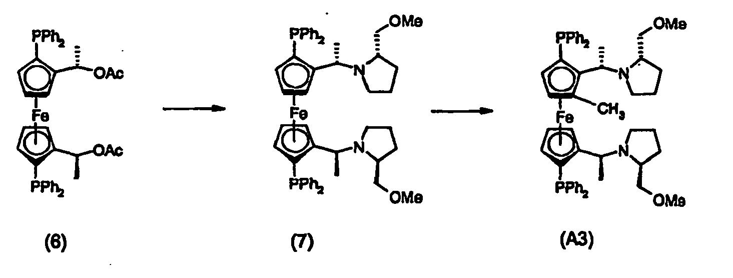

a) Herstellung der Verbindung (6):
   Die Verbindung (6) ist in der Literatur beschrieben: T. Hayashi et al., J. Organomtal. Chem., 370 (1989) 129-139.
b) Herstellung der Verbindung (7):
   Eine Lösung von 5,0 g (6,6 mmol) der Verbindung (6) und 13,3 g (115 mmol) O-Methyl-(S)-prolinol in 50 ml Acetonitril un 5 ml Wasser wird während mindestens 80 Stunden bei 100°C gerührt. Nach Abkühlen wird das Lösungsmittel und der Ueberschuss O-Methyl-prolinol am Rotationsverdampfer unter reduziertem Druck abdestilliert. Der Rückstand wird in 20 ml TBME aufgenommen und mehrmals mit Wasser gewaschen. Die organische Phase wird mit Natriumsulfat getrocknet und am Rotationsverdampfer eingeengt. Das Rohprodukt wird chromatographisch (Silikagel 60; Laufmittel = 1 Etyhlacetat /4 Heptan und 1 % Triethylamin) gereinigt. Das Produkt wird als oranger, fester Schaum erhalten (Ausbeute 93%).
   ¹H-NMR (C₆D₆), charakteristische Signale: 8 7,52-7,45 (m, 4H), 7,41 - 7,34 (m, 8H), 7,01-6,9 (m, 12H) 4,53 (m, 2H), 4,54 - 4,47 (m, 2H), 4,20 (m, 2H), 3,17 (m, 2H), 3,11 (s, 6H), 1,52 (d, 6H). ³¹P-NMR (C₆D₆): δ -24,2.
c) Herstellung der Verbindung (A3):
   Zu einer Lösung von 2g (2,4 mmol) der Verbindung (7) in 35 ml TBME werden bei 0°C 4 ml (5,2 mmol) s-Butyllithium (s-BuLi) (1,3 m in Cyclohexan) zugetropft und das Reaktionsgemisch während 2 Stunden bei 0°C weitergerührt. Dann wird auf -78°C gekühlt und es werden 0,195 ml (3,1 mmol) Methyljodid zugegeben. Nach einer Stunde wird das Kühlbad entfernt. Man lässt die Temperatur auf 0°C ansteigen und rührt noch 2 Stunden bei 0°C. Das Reaktionsgemisch wird auf Eiswasser gegossen, die organische Phase mit Natriumsulfat getrocknet und am Rotatotionsverdampfer unter reduziertem Druck eingedampft. Der Rückstand wird chromatographisch gereinigt (Silikagel 60; Laufmittel = 1 Ethylacetat/ 4 Heptan und 1 % Triethylamin). Das Produkt wird als gelber Feststoff mit einer Ausbeute von 71% erhalten. ¹H-NMR (C₆D₆), charakteristische Signale: δ 7,50-7,46 (m, 4H), 7,44-7,33 (m, 8H), 7,01-6,93 (m, 12H) 4,60 (m, 1 H), 4,59 - 4.49 (m, 1 H), 4,42 (m, 1 H), 4,39 (m, 1 H), 4,35 - 4,27 (m, 2H), 3,29 (m, 1H), 3,12 (s, 3H), 3,09 (s, 3H), 2,14 (s, 3H), 1,70 (d, 3H), 1,42 (d, 3H). ³¹P-NMR (C₆D₆): 8 -23,3; -24,1.

### Beispiel A4: Bromsubstitution in den 5,5'-Stellungen

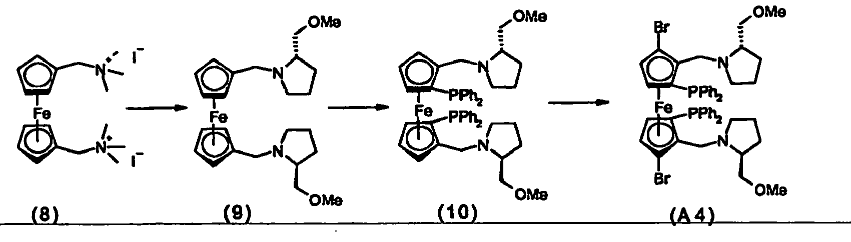

a) Herstellung von Verbindung (8)
   Verbindung (8) wird wie von C. Glidewell et al. in J. Organometal. Chem. 527 (1997), Seiten 259-261 beschrieben hergestellt.
b) Herstellung von Verbindung (9)
   Zu 5,01 g (8,57 mMol) der Verbindung (8) in 600 ml trockenem Acetonitril werden 4,94 g (42,88 mMol) (S)-2-(Methoxymethyl)pyrrolidin gegeben und das Reaktionsgemisch während 72 Stunden bei 100 °C gerührt. Nach Abkühlen wird das Lösungsmittel am Rotationsverdampfer abdestilliert. Der Rückstand wird in gesättigter wässeriger NaHCO₃ / Methylenchlorid extrahiert, die organischen Phasen mit Natriumsulfat getrocknet und am Rotationsverdampfer eingeengt. Die Chromatographie (Silikagel 60; Laufmittel =1 THF /2 Heptan und 2% Triethylamin) liefert das gewünschte Produkt als oranges Oel.
   ¹H-NMR (C₆D₆), charakteristische Signale: 84,16 (m, 2H), 4,11 (m, 2H), 3,98 (m, 4H), 3,95-3,90 (d, 2H), 3,50 - 3,40 (m, 4H), 3,24 - 3,19 (m, 2H), 3,20 (s, 6H), 2,97 (m, 2H), 2,79 (m, 2H), 2,21 (m, 2H), 1,81-1,42 (m, 8H).
c) Herstellung von Verbindung (10)
   730 mg (1,66 mMol) der Verbindung (9) werden in 2 ml TBME gelöst. Unter Rühren werden bei -78 °C langsam 3,18 ml (4,14 mmol) s-BuLi (1,3 Molare Lösung in Cyclohexan) zugetropft. Das Reaktionsgemisch wird 1 Stunde bei -78°C und dann 4 Stunden bei -30°C gerührt. Dann wird wieder auf -78 °C gekühlt und es werden 988 mg (4,48 mMol) Diphenylchlorphosphin zugegeben. Nach 15 Minuten wird die Kühlung entfernt und das Reaktionsgemisch über Nacht weitergerührt. Dann wird mit Wasser / TBME extrahiert, die organische Phase mit Natriumsulfat getrocknet und das Lösungsmittel am Rotationsverdampfer unter reduziertem Druck abdestilliert. Die Chromatographie (Silikagel 60; Laufmittel zuerst Methylenchlorid, bis Cl-PPh₂ eluiert ist, dann 1 THF /5 Heptan und 1 % Triethylamin) liefert das gewünscht Produkt als gelben Feststoff (Ausbeute 70%).
   ¹H-NMR (C₆D₆), einige charakteristische Signale: δ 7,53 (m, 4H), 7,29 (m, 4H), 7,05 - 6,96 (m, 12H), 4,64 - 4,59 (m, 2H), 4,39 (m, 2H), 4,17 (m, 2H), 3,63 (m, 2H), 3,37 (m, 2H), 3,21 (s, 6H). ³¹P-NMR (C₈D₆): 8 - 22,6 (s).
d) Herstellung von Verbindung (A4)
   Eine Lösung von 510 mg (0,63 mmol) der Verbindung (10) in 10 ml TBME wird auf -78 °C gekühlt und es werden langsam 1,05 ml (1,57 mmol) t-ButylLithium (1,5 molare Lösung in Pentan) zugetropft. Man lässt die Temperatur auf -30°C ansteigen und rührt zunächst 2 Stunden bei dieser Temperatur und anschliessend noch 30 Minuten bei 0 °C weiter. Nach erneutem Abkühlen auf -78 °C wird eine Lösung von 408 mg (1,57 mmol) 1,2-Dibrom-tetrafluoroethan in 1 ml THF langsam zugetropft und 30 Minuten bei -78 °C weitergerührt. Dann wird das Kühlbad entfernt und noch 1 Stunde weitergerührt. Das Reaktionsgemisch wird mit 2 ml Wasser versetzt und mit Methlyenchlorid extrahiert. Die organischen Phasen werden mit Natriumsulfat getrocknet und im Rotationsverdampfer eingeengt Nach chromatographischer Reinigung (Silikagel 60; Laufmittel = 20 Heptan /1 Ethylacetat und 1% Triethylamin) wird das Produkt als gelber Feststoff erhalten.
   ¹H-NMR (C₆D₆), einige charakteristische Signale: δ 7,35 - 7,29 (m, 4H), 7,23 - 7,16 (m, 4H), 7,02 - 6,98 (m, 6H), 6,88 - 6,79 (m, 6H), 4,77 (m, 2H), 4,67 (m, 2H), 3,88 (m, 2H), 3,52 (m, 2H), 3,28 (s, 6H), 3,08 (m, 2H),. ³¹P-NMR (C₆D₆): δ - 23,1 (s).

### Beispiel A5: Trimethylsilyl-Substitution in 5-Stellung

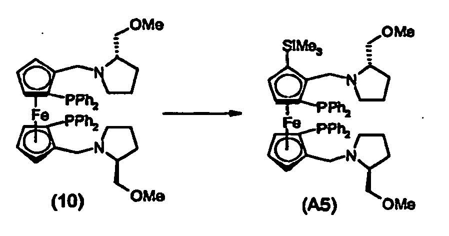

Eine Lösung von 500 mg (0,62 mmol) der Verbindung (10) in 20 ml TBME wird auf -78 °C gekühlt und es werden langsam 0,5 ml (0.75 mmol) t-BuLi (1,5 molare Lösung in Pentan) zugetropft. Anschliessend rührt man während 2 Stunden bei einer Temperatur im Bereich von -30 °C bis -15 °C. Nach erneutem Abkühlen auf -78 °C werden 0,1 ml (0,8 mmol) Trimethylchlorsilan zugegeben und 30 Minuten bei -78 °C weitergerührt. Dann wird das Kühlbad entfernt und noch 1 Stunde weitergerührt. Das Reaktionsgemisch wird mit 2 ml Wasser versetzt und dann mit Wasser extrahiert. Die organische Phase wird mit Natriumsulfat getrocknet und im Rotationsverdampfer eingeengt. Nach chromatographischer Reinigung (Silikagel 60; Laufmittel = 20 Heptan /1 Ethylacetat und 1% Triethylamin) wird das Produkt als oranger Feststoff erhalten.
¹H-NMR (C₆D₆), einige charakteristische Signale: δ 7.51 - 7,45 (m, 4H), 7,31 - 7,22 (m, 4H), 7,02 - 6,88 (m, 12H), 4,77 (m, 1 H), 4,73 - 4,65 (m, 2H), 4,12 (m, 1 H), 3,98 (m, 1 H), 3,54 (m, 1 H), 3,34 (s, 3H), 3,22 (m, 3H),.0,57 (m, 9H). ³¹P-NMR (C₆D₆): δ - 23,3, -23.5.

### Beispiel A6: Trimethylsilyl-Substitution in den 5,5'-Stellungen

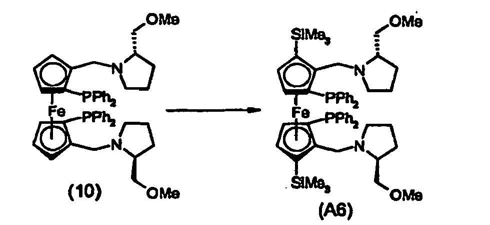

Eine Lösung von 500 mg (0,62 mmol) der Verbindung (10) in 20 ml TBME wird auf -78 °C gekühlt und es werden langsam 0,9 ml (1,4 mmol) t-BuLi (1,5 molare Lösung in Pentan) zugetropft. Anschliessend rührt man während 2 Std. bei einer Temperatur im Bereich von -30 °C bis -15 °C. Nach erneutem Abkühlen auf -78 °C werden 0,2 ml (1,6 mmol) Trimethylchlorsilan zugegeben und 30 Minuten bei -78 °C weitergerührt. Dann wird das Kühlbad entfernt und noch 1 Stunde weitergerührt. Das Reaktionsgemisch wird mit 2 ml Wasser versetzt und dann mit Wasser extrahiert. Die organische Phase wird mit Natriumsulfat getrocknet und am Rotationsverdampfer eingeengt. Nach chromatographischer Reinigung (Silikagel 60; Laufmittel = 20 Heptan /1 Ethylacetat und 1% Triethylamin) fällt das Produkt als oranger Feststoff an und liegt laut 1 H- und 31 P-NMR als ein Gemisch von zwei Atropisomeren vor. ¹H-NMR (C₆D₆), einige charakteristische Signale:
Signale der O-CH₃ Gruppen: 8 3,36 und 3,32 (zwei s mit Integral Verhältnis - 33 : 67, total 6H).
Signale der Si(CH₃)₃ Gruppe:δ 0,65 und 0,03 (zwei s mit Integral Verhältnis ~ 67: 33, total 18H).
³¹P-NMR (C₆D₆): 8 - 24,5 (s, grosses Signal), -28, 1(s, kleineres Signal).

### Beispiel (A7):

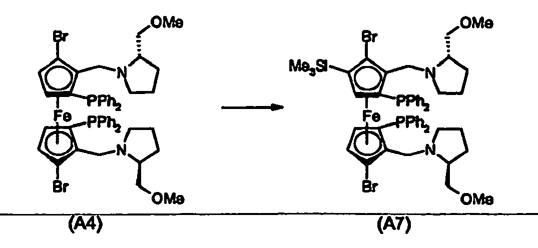

Folgende Lösungen werden hergestellt:
Lösung a): Zu 0,232 ml (1,37 mmol) 2,2,6,6-Tetramethylpiperidin in 1 ml THF werden bei 0°C 0,86 ml (1,37 mmol) n-Butyllithium (1,6 m in Hexan) zugetropft und die Lösung 1 Stunde bei dieser Temperatur gerührt.
Lösung b) 220 mg (0,23 mmol) der Verbindung (A4) in 10 ml THF.
Die Lösung a) wird auf-78°C gekühlt. Unter Rühren wird die Lösung b) während 15 Minuten zugetropft und das Reaktionsgemisch zunächst 30 Minuten bei -78°C, dann 4 Stunden bei -15° bis -20 °C weitergerührt. Nach erneutem Abkühlen auf-78°C werden 0,173 ml (1,37 mmol) Trimethylchlorsilan zugetropft und dann 2 Sunden bei -20°C weitergerührt. Ueber Nacht wird das Reaktionsgemisch wieder bei -78°C gerührt. Dann lässt man die Temperatur langsam auf +10 °C ansteigen. Das Reaktionsgemisch wird anschliessend mit wenig Wasser versetzt und mit Ethylacetat / Wasser extrahiert. Die organischen Phasen werden gesammelt, mit Natriumsulfat getrocknet und das Lösungsmittel im Rotationsverdampfer abdestilliert. Nach chromatographischer Reinigung (Kieselgel 60; Laufmittel =1 Ethylacetat/15 Heptan mit 1% Triethylamin) wird ein oranges Produkt isoliert. ¹H-NMR (CDCl₃), einige charakteristische Signale: δ 7,79 - 7,73 (m, 2H), 7,65-7,59 (m, 2H), 7,04 - 6,94 (m, 6H), 3,47 (s, 3H), 3,44 (s, 3H), 0,52 (s, 9H). ³¹P-NMR (C₆D₆): 8 -24,6; -24,9.

### B) Herstellung von Metallkomplexen

### Beispiel B1:

5,1 mg (0,0136 mMol) [Rh(nbd)₂]BF₄ und 10,4 mg (0,0163 mmol) Diphosphin gemäss Beispiel A6 werden in ein Schlenkgefäss mit Magnetrührer eingewogen und mit Hilfe von Vakuum und Argon die Luft verdrängt. Nach Zugabe von 0,8 ml entgastem Methanol unter Rühren erhält man eine orange Lösung des Metallkomplexes (Katalysatorlösung). Es bildet sich ein einheitlicher, C2-symmetrischen Komplex. ¹H-NMR (CDCl₃), einige charakteristische Signale: Signal der O-CH₃ Gruppen: 8 3,14 (s, 6H); Signale der Si(CH₃)₃ Gruppe: δ 0,21 (s, 18H;) ³¹P-NMR (CDCl₃): δ +25,6 (d, J_{Rh-p}= 170 Hz).

### C) Anwendungsbeispiele

### Beispiel C1: Hydrierung ungesättigter Verbindungen

Die Durchführung der Hydrierungen und die Bestimmung der optischen Ausbeuten ee ist allgemein von W. Weissensteiner et al in Organometallics 21 (2002), Seiten 1766-1774 beschrieben. Die Katalysatoren werden jeweils "in situ" durch Mischen von Ligand und Metallkomplex als Katalysatorvorläufer (falls nicht anders erwähnt = [Rh(norbomadien)₂]BF₄), im Lösungsmittel hergestellt. Falls nicht anders erwähnt, ist die Substrat-Konzentration 0,25 Mol/l, das Molverhältnis Substrat zu Metall = 200 und das Molverhältnis Ligand zu Metall = 1,05.

### Hydrierungen:

### Reaktions-Bedingungen für die Substrate MAC, DMI, MCA, EAC:

Katalysator-Vorläufer = [Rh(norbomadien)₂]BF₄; Lösungsmittel = MeOH; Wasserstoffdruck = 1 bar; Temperatur = 25 °C; Reaktionszeit 1 Stunde.

Die Hydrierungen von EAC werden in Ethanol in Gegenwart von 5% (v/v) CF₃CH₂OH durchgeführt. Bei EAC erfolgt die Bestimmung des ee's mittels Gaschromatographie mit chiraler Säule [Lipodex E (30m); 130 °C isotherm; 190 KPa H₂].

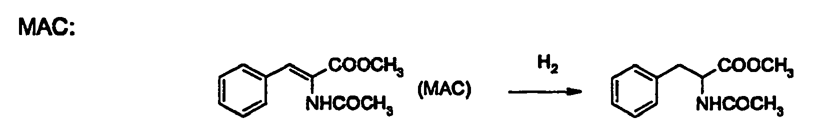

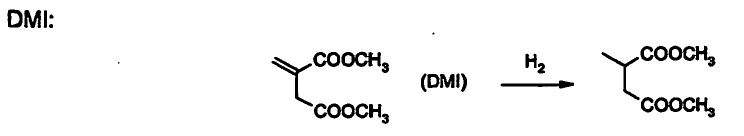

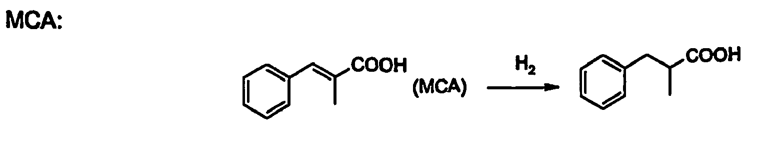

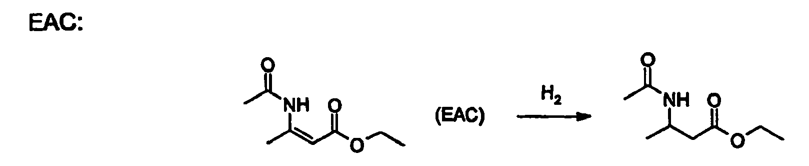

### Reaktionsbedingungen für das Substrate MPG:

Katalysator-Vorläufer = [Rh(norbornadien)Cl]₂]; Lösungsmittel = Toluol; Wasserstoffdruck = 80 bar (8x10⁶ Pa); Temperatur = 25 °C; Reaktionszeit 16 Stunden.

MPG:

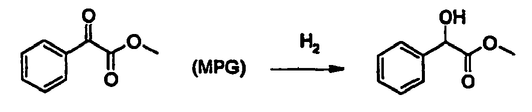

### Reaktionsbedingungen für das Substrat EOV:

Katalysator-Vorläufer = [Rul₂(p-cumen)]₂; Lösungsmittel = Ethanol; Zusatz: 0,06 ml 1N HCl pro 10 ml Ethanol; Wasserstoffdruck = 80 bar; Temperatur= 80 °C; Reaktionszeit 16 Stunden. Die ee- Bestimmung erfolgt mittels Gaschromatographie mit chiraler Säule [Lipodex E (30m)] nach Derivatisierung mit Trifluoressigsäure-Anhydrid.

EOV:

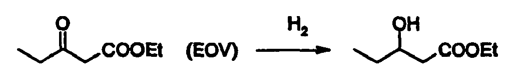

### Reaktions-Bedingungen für das Substrat MEA:

Molverhältnis Substrat zu Metall =100; Katalysator-Vorläufer = [lr(COD)Cl]₂; Lösungsmittel = Toluol; Zusätze: 2 Äquivalente Tetrabutylammoniumjodid pro Äquivalent lr und 0,03 ml Trifluoressigsäure pro 10 ml Toluol; Wasserstoffdruck = 80 bar; Temperatur = 25 °C; Reaktionszeit 16 Stunden.

MEA:

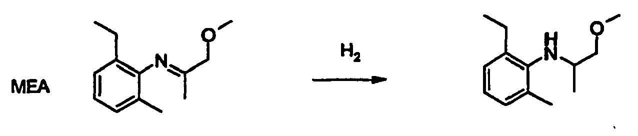

Die Ergebnisse der Hydrierung sind in den nachfolgenden Tabellen 1 und 2 angegeben. Bei "ee" handelt es sich um den Enantiomerenüberschuss. In Klammer ist die Konfiguration angegeben. Bei den Ergebnissen mit dem Vergleichsligand und substituierten Liganden in Tabelle 1 ist ersichtlich, dass die Substitution überraschend die Konfiguration beeinflussen und umkehren kann. Ferner ist die Erhöhung der optischen Ausbeuten bei Einführung von Substituenten sichtbar.

**Tabelle 1:**

| Substrat | Vergleichsligand | Substituierter Ligand | Substituierter Ligand |
|---|---|---|---|
| | 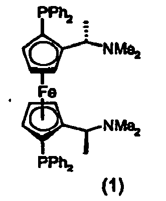 | 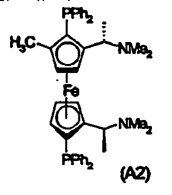 | 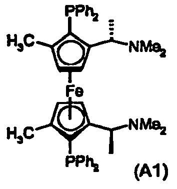 |
| DMI | 15% ee (R) | | 43% ee (S) |
| EAC | 5% ee (S) | 13% ee (R) | 47% ee (R) |
| EOV | 23% ee (S) | | 40% ee (S) |

**Tabelle 2: Hydrierungen mit erfindungsgemässen Liganden**

| Substrat | Ligand | Substituierter Ligand | Substituierter Ligand | Substituierter Ligand |
|---|---|---|---|---|
| | 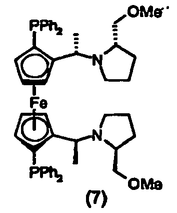 | 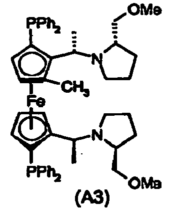 | | |
| MAC | 89% ee (S) | 92% ee (S) | | |
| DMI | 31% ee (S) | 99% ee (S) | | |
| EOV | 50% ee (S) | 65% ee (S) | | |
| MEA | 46% ee (S) | 60% ee (S) | | |
| | 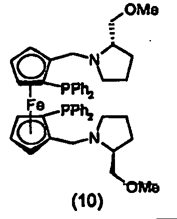 | 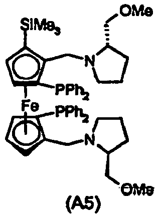 | 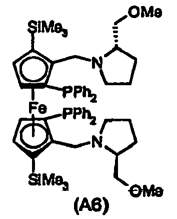 | 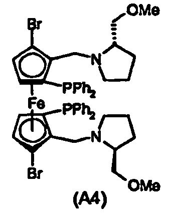 |
| MAC | 78% ee (R) | | 94% ee (R) | |
| MCA | 64% ee (S) | | | 84% ee (S) |
| MPG | 14% ee (R) | 22% ee (S) | 35%ee (R) | 24% ee (R) |
| MEA | 21 % ee (R) | | | 29% ee (R) |

## Patentansprüche

1. Verbindungen der Formel I oder I' in Form von Racematen, Gemischen von Stereoisomeren oder optisch reinen Stereisoomeren, 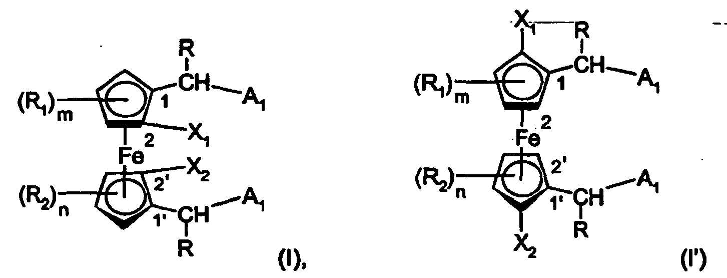 worin
R Wasserstoff, oder unsubstituiertes oder mit F, Cl, OH, C₁-C₄-Alkyl oder C₁-C₄-Alkoxy substituiertes C₁-C₈-Alkyl, C₃-C₈-Cycloalkyl, C₆-C₁₀-Aryl oder C₇-C₁₁-Aralkyl bedeutet;
X₁ und X₂ unabhängig voneinander eine sekundäre Phosphingruppe darstellen;
A₁ für eine Aminogruppe steht; oder
A₁ einen Rest -OR₃ darstellt, worin R₃ Wasserstoff oder unsubstituiertes oder mit F, C₁-C₄-Alkyl, C₁-C₄-Alkoxy, Phenyl oder -N(C₁-C₄-Alkyl)₂ substituiertes C₁-C₁-Alkyl, C₃-C₈-Cycloalkyl, C₆-C₁₀-Aryl, C₇-C₁₁-Aralkyl oder C₁-C₁₈-Acyl bedeutet;
R₁ und R₂ unabhängig voneinander ein Halogenatom oder einen über ein C-Atom, N-Atom, S-Atom, Si-Atom, eine P(O)- oder P(S)-Gruppe an die Cyclopentadienylringe gebundenen Substituenten bedeuten;
m für eine Zahl von 1 bis 3, und
n für 0 oder eine Zahl von 1 bis 3 stehen.

2. Verbindungen gemäss Anspruch 1, **dadurch gekennzeichnet, dass** R für Wasserstoff, Methyl, Ethyl, Cyclohexyl, Benzyl oder Phenyl steht.

3. Verbindungen gemäss Anspruch 1, **dadurch gekennzeichnet, dass** die sekundären Phosphingruppen X₁ und X₂ zwei gleiche oder zwei verschiedene Kohlenwasserstoffreste enthalten und dass die sekundären Phosphingruppen X₁ und X₂ gleich oder verschieden sind.

4. Verbindungen gemäss Anspruch 1, **dadurch gekennzeichnet, dass** die X₁ und X₂ gleiches oder verschiedenes nicht-zyklisches Sekundärphosphin, ausgewählt aus der Gruppe -P(C₁-C₆-Alkyl)₂, -P(C₅-C₈-Cycloalkyl)₂, -P(C₇-C₁₂-Bicycloalkyl)₂, -P(o-Furyl)₂, -P(C₆H₅)₂, -P[2-(C₁-C₆-Alkyl)C₆H₄]₂, -P[3-(C₁-C₆-Alkyl)C₆H₄]₂, -P[4-(C₁-C₆-Alkyl)C₆H₄]₂, -P[2-(C₁-C₆-Alkoxy)C₆H₄]₂, -P[3-(C₁-C₆-Alkoxy)C₆H₄]₂, -P[4-(C₁-C₆-Alkoxy)C₆H₄]₂, -P[2-(Triftuormethyl)C₆H₄]₂, -P[3-(Trifluormethyl)C₆H₄]₂, -P[4-(Trifluormethyl)C₆H₄]₂, -P[3,5-Bis(trifluormethyl)C₆H₃]₂, -P[3,5-Bis(C₁-C₆-Alkyl)₂C₆H₃]₂, -P[3,5-Bis(C₁-C₆-Alkoxy)₂C₆H₃]₂, -P[3,4,5-Tris(C₁-C₆-Alkoxy)₂C₆H₃]₂, und -P[3,5-Bis(C₁-C₆-Alkyl)₂-4-(C₁-C₆-Alkoxy)C₆H₂]₂, oder zyklisches Phosphin, ausgewählt aus der Gruppe 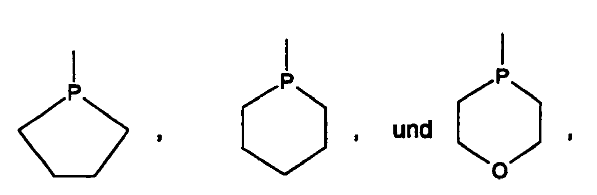 darstellen, die unsubstituiert oder ein- oder mehrfach substituiert sind mit C₁-C₄-Alkyl, C₁-C₄-Alkoxy, C₁-C₄-Alkoxy-C₁-C₂-Alkyl, Phenyl, Benzyl, Benzyloxy, C₁-C₄-Alkyliden-dioxyl oder gegebenenfalls mit Phenyl substituiertes Methylendioxyl.

5. Verbindungen gemäss Anspruch 1, **dadurch gekennzeichnet, dass** X₁ und X₂ -P(CH₃)₂, -P(i-C₃H₇)₂, -P(n-C₄H₉)₂, -P(i-C₄H₉)₂, -P(C₆H₁₁)₂, -P(Norbomyl)₂, -P(o-Furyl)₂, -P(C₆H₅)₂, P[2-(Methyl)C₆H₄]₂, P[3-(Methyl)C₆H₄]₂, -P[4-(Methyl)C₆H₄]₂, -P[2-(Methoxy)C₆H₄]₂, -P[3-(Methoxy)C₆H₄]₂, P[4-(Methoxy)C₆H₄]₂, -P[3-(Trifluormethyl)C₆H₄]₂, -P[4-(Trifluormethyl)C₆H₄]₂, -P[3,5-Bis(trifluormethyl)C₆H₃]₂, -P[3,5-Bis(methyl)C₆H₃]₂, -P[3,5-Bis(methoxy)C₆H₃]₂, -P[3,4,5-Tri(methoxy)C₆H₂]₂,-P[3,5-Bis(methyl)₂-4-(methoxy)C₆H₂]₂, und solche der Formeln 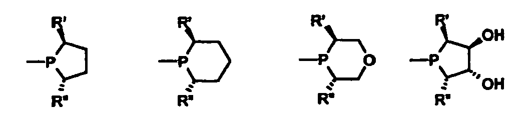 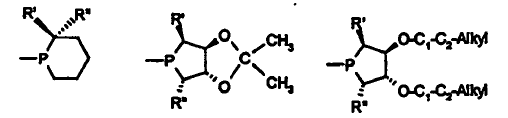 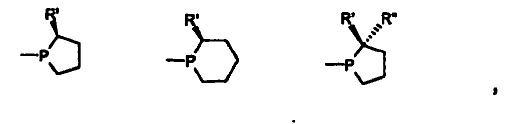 sind, worin
R' Methyl, Ethyl, Methoxy, Ethoxy, Phenoxy, Benzyloxy, Methoxymethyl, Ethoxymethyl oder Benzyloxymethyl darstellt und R" die gleiche Bedeutung wie R' hat.

6. Verbindungen gemäss Anspruch 1, **dadurch gekennzeichnet, dass** A, -NH₂, -NHR₅ oder -NR₅R₆ ist, wobei R₅ und R₆ unabhängig voneinander gegebenenfalls substituierte aliphatische, cycloaliphatische oder aromatische Kohlenwasserstoffreste bedeuten oder R₅ und R₆ zusammen mit dem N-Atom einen N-heterozyklischen Ring bilden, der weitere Heteroatome aus der Gruppe O, S oder N(C₁-C₄-Alkyl) enthalten kann.

7. Verbindungen gemäss Anspruch 6, **dadurch gekennzeichnet, dass** R₅ und R₆ Methyl, Ethyl, die Isomeren von Propyl und Butyl, Phenyl, Benzyl, Cyclohexyl oder R₅ und R₆ zusammen Tetramethylen, Pentamethylen oder 3-Oxapentylen darstellen, die unsubstituiert oder mit C₁-C₄-Alkyl, C₅-C₆-Cycloalkyl, Phenyl, Benzyl, C₁-C₄-Alkoxy, C₁-C₄-Alkoxymethyl, C₁-C₄-Alkoxyethyl, (C₁-C₄-Alkyl)₂N-, (C₁-C₄-Alkyl)₂N-methyl und (C₁-C₄-Alkyl)₂N-ethyl substituiert sind.

8. Verbindungen gemäss Anspruch 1, **dadurch gekennzeichnet, dass** die Substituenten R₁ und R₂ einmal (m ist 1 und n ist 0), je einmal (m und n sind 1), zweimal (entweder m oder n ist 2), oder dreimal (m ist 2 und n ist 1) im Cyclopentadienylring beziehungsweise den Cyclopentadienylringen gebunden sind.

9. Verbindungen gemäss Anspruch 1, **dadurch gekennzeichnet, dass** die Positionen für die Substituenten R₁ und R₂ die 3, 3', 5 und 5' Stellungen sind und bevorzugte Substitutionsmuster die 3-Stellung, die 3- und 3'-Stellungen, die 5-Stellung und die 5- und 5'-Stellungen sind.

10. Verbindungen gemäss Anspruch 1, **dadurch gekennzeichnet, dass** die Substituenten R₁ und R₂ ausgewählt sind aus C₁-C₄-Alkyl, gegebenenfalls substituiertem Phenyl, Tri(C₁-C₄-Alkyl)Si, Triphenylsilyl, Halogen, -SR₀₆, -CH₂OH, -CHR₀₆OH, -CR₀₆R'₀₆OH, -CH₂O-R₀₆, -CH(O), -CO₂H, -CO₂R₀₈ und -P(O)(R₀₃)₂, worin R₀₆ einen Kohlenwasserstoffrest mit 1 bis 10 C-Atomen darstellt und R'₀₈O unabhängig die gleiche Bedeutung wie R'₀₈ hat, und worin R₀₃ Wasserstoff, C₁-C₈-Alkyl, C₅-C₈-Cycloalkyl, Phenyl oder Benzyl darstellt.

11. Verbindungen der Formel IV 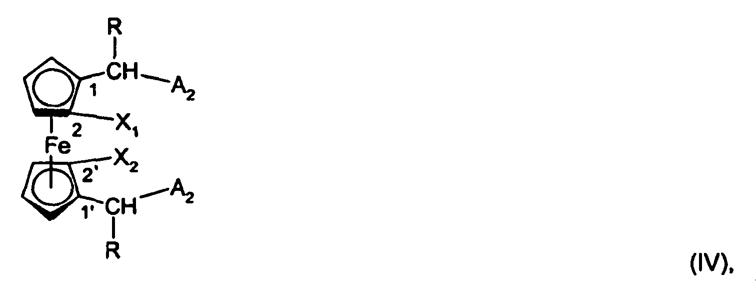 worin R Wasserstoff, oder unsubstituiertes oder mit F, Cl, OH, C₁-C₄-Alkyl oder C₁-C₄-Alkoxy substituiertes C₁-C₈-Alkyl, C₃-C₈-Cycloalkyl, C₆-C₁₀-Aryl oder C₇-C₁₁-Aralkyl bedeutet; A₂ offenkettiges oder zyklisches Sekundäramino mit wenigstens einem asymmetrischen C-Atom darstellt, und X₁ und X₂ unabhängig voneinander eine sekundäre Phosphingruppe bedeuten.

12. Metallkomplexe von Metallen ausgewählt aus der Gruppe der TM8-Metalle, bevorzugt Cu, Ag, Au, Ni, Co, Rh, Pd, Ir, Ru und Pt, mit einer Verbindung der Formel I oder I' gemäss Anspruch 1, oder der Formel IV gemäss Anspruch 11, als Liganden.

13. Metallkomplexe gemäss Anspruch 12, die den Formeln XII und XIII entsprechen,
A₃MeL, (XII),
(A₃MeLᵣ)^{(z+)}(E⁻)_{z} (XIII),
worin A₃ für eine der Verbindungen der Formeln I oder I' oder IV steht,
L für gleiche oder verschiedene monodentate, anionische oder nicht-ionische Liganden steht, oder L für gleiche oder verschiedene bidentate, anionische oder nicht-ionische Liganden steht;
r für 2, 3 oder 4 steht, wenn L einen monodentaten Liganden bedeutet, oder n für 1 oder 2 steht, wenn L einen bidentaten Liganden bedeutet;
z für 1, 2 oder 3 steht;
Me ein Metall ausgewählt aus der Gruppe Rh, Ir und Ru bedeutet; wobei das Metall die Oxidationsstufen 0, 1, 2, 3 oder 4 aufweist;
E⁻ das Anion einer Sauerstoffsäure oder Komplexsäure ist; und
die anionischen Liganden die Ladung der Oxidationsstufen 1, 2, 3 oder 4 des Metalls ausgleichen.

14. Metallkomplexe gemäss Anspruch 12, die der Formel XVI entsprechen,
[RuₐH_{b}Z_{c}(A3)_{d}Lₑ]_{f}(E^{k})_{g}(S)ₕ (XVI),
worin
Z Cl, Br oder I bedeutet; A₃ für eine Verbindung der Formeln I oder I' oder IV steht; L für gleiche oder verschiedene Liganden steht; E⁻ das Anion einer Sauerstoffsäure, Mineralsäure oder Komplexsäure ist; S für ein koordinationsfähiges Lösungsmittel als Ligand steht; und a 1 bis 3, b 0 bis 4, c 0 bis 6, d 1 bis 3, e 0 bis 4, f 1 bis 3, g 1 bis 4, h 0 bis 6 und k 1 bis 4 bedeuten, wobei die Gesamtladung des Komplexes neutral ist.

15. Verwendung der Metallkomplexe gemäss Anspruch 12 als homogene Katalysatoren zur Herstellung chiraler organischer Verbindungen, bevorzugt zur asymmetrischen Anlagerung von Wasserstoff an eine Kohlenstoff- oder Kohlenstoff-Heteroatomdoppelbindung in prochiralen organischen Verbindungen.

16. Verfahren zur Herstellung chiraler organischer Verbindungen durch asymmetrische Anlagerung von Wasserstoff an eine Kohlenstoff- oder Kohlenstoff-Heteroatomdoppelbindung in prochiralen organischen Verbindungen in Gegenwart eines Katalysators, **dadurch gekennzeichnet ist, dass** man die Anlagerung in Gegenwart katalytischer Mengen wenigstens eines Metallkomplexes gemäss Anspruch 12 durchführt.

## Claims

1. A compound of the formula I or I' in the form of a racemate, a mixture of stereoisomers or an optically pure stereoisomer, 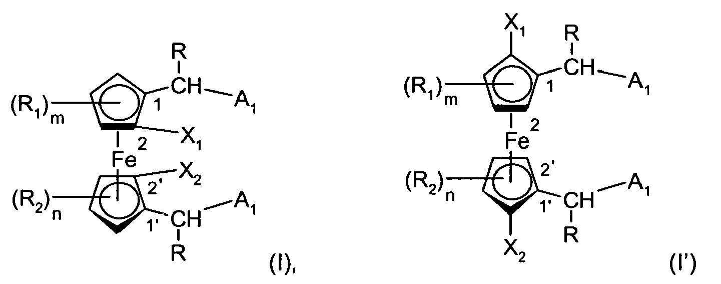 where
R is hydrogen or unsubstituted or F-, Cl-, OH-, C₁-C₄-alkyl- or C₁-C₄-alkoxy-substituted C₁-C₈-alkyl, C₃-C₈-cycloalkyl, C₆-C₁₀-aryl or C₇-C₁₁-aralkyl;
X₁ and X₂ are each, independently of one another, a secondary phosphino group;
A, is an amino group; or
A₁ is an -OR₃ radical, where R₃ is hydrogen or unsubstituted or F-, C₁-C₄-alkyl-,
C₁-C₄-alkoxy-, phenyl- or N(C₁-C₄-alkyl)₂-substituted C₁-C₁₈-alkyl, C₃-C₈-cycloalkyl, C₆-C₁₀-aryl, C₇-C₁₁-aralkyl or C₁-C₁₈-acyl;
R₁ and R₂ are each, independently of one another, a halogen atom or a substituent bound to the cyclopentadienyl rings via a C atom, N atom, S atom, Si atom, a P(O) group or P(S) group;
m is from 1 to 3, and
n is 0 or from 1 to 3.

2. The compound as claimed in claim 1, **characterized in that** R is hydrogen, methyl, ethyl, cyclohexyl, benzyl or phenyl.

3. The compound as claimed in claim 1, **characterized in that** the secondary phosphino groups X₁ and X₂ contain two identical or two different hydrocarbon radicals and **in that** the secondary phosphino groups X₁ and X₂ are identical or different.

4. The compound as claimed in claim 1, **characterized in that** the radicals X₁ and X₂ are identical or different acyclic sec-phosphino groups in each case selected from the group consisting of -P(C₁-C₆-alkyl)₂, -P(C₅-C₈-cycloalkyl)₂, -P(C₇-Cₗ₂-bicycloalkyl)₂, -P(o-furyl)₂, - P(C₆H₅)₂, -P[2-(C₁-C₆-alkyl)C₆H₄]₂, -P[3-(C₁-C₆-alkyl)C₆H₄]₂, -P[4-(C₁-C₆-alkyl)C₆H₄]₂, -P[2-(C₁-C₆-alkoxy)C₆H₄]₂, -P[3-(C₁-C₆-alkoxy)C₆H₄]₂, -P[4-(C₁-C₆alkoxy)C₆H₄]₂, -P[2-(trifluoromethyl)C₆H₄]₂, -P[3-(trifluoromethyl)C₆H₄]₂, -P[4-(trifluoromethyl)C₆H₄]₂, -P[3,5-bis(trifluoromethyl)C₆H₃]₂, -P[3,5-bis(C₁-C₆-alkyl)₂C₆H₃]₂, -P(3,5-bis(C₁-C₆-alkoxy)₂C₆H₃]₂, -P(3,4,5-tris(C₁-C₆-alkoxy)₂C₆H₃]₂ and -P[3,5-bis(C₁-C₆-alkyl)₂-4-(C₁-C₆-alkoxy)C₆H₂]₂, or cyclic phosphino groups selected from the group consisting of 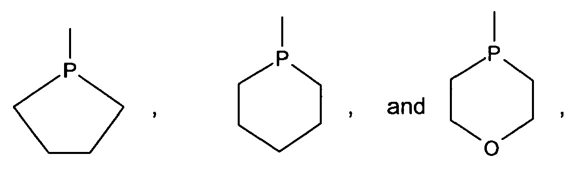 which are unsubstituted or monosubstituted or multiply substituted by C₁-C₄-alkyl, C₁-C₄-alkoxy, C₁-C₄-alkoxy-C₁-C₂-alkyl, phenyl, benzyl, benzyloxy, C₁-C₄-alkylidenedioxyl or unsubstituted or phenyl-substituted methylenedioxyl.

5. The compound as claimed in claim 1, **characterized in that** X₁ and X₂ are each -P(CH₃)₂, -P(i-C₃H₇)₂, -P(n-C₄H₉)₂, -P(i-C₄H₉)₂, -P(C₆H₁₁)₂, -P(norbornyl)₂, -P(o-furyl)₂, -P(C₆H₅)₂, P[2-(methyl)C₆H₄]₂, P[3-(methyl)C₆H₄]₂, -P[4-(methyl)C₆H₄]₂, -P[2-(methoxy)C₆H₄]₂, -P[3-(methoxy)C₆H₄]₂, -P[4-(methoxy)C₆H₄]₂, -P[3-(trifluoromethyl)C₆H₄]₂, -P[4-(trifluoromethyl)C₆H₄]₂, -P[3,5-bis(trifluoromethyl)C₆H₃]₂, -P[3,5-bis(methyl)C₆H₃]₂, -P[3,5-bis(methoxy)C₆H₃]₂, -P[3,4,5-tri(methoxy)C₆H₂]₂ and -P[3,5-bis(methyl)₂-4-(methoxy)-C₆H₂]₂ or a group having one of the formulae 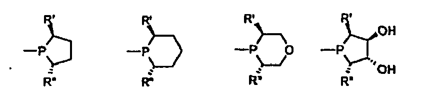 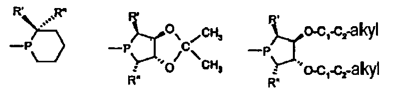 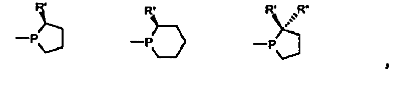 where
R' is methyl, ethyl, methoxy, ethoxy, phenoxy, benzyloxy, methoxymethyl, ethoxymethyl or benzyloxymethyl and R" has the same meanings as R'.

6. The compound as claimed in claim 1, **characterized in that** A, is -NH₂, -NHR₅ or -NR₅R₆, where R₅ and R₆ are each, independently of one another, a substituted or unsubstituted aliphatic, cycloaliphatic or aromatic hydrocarbon radical or R₅ and R₆ together with the N atom form an N-heterocyclic ring which may contain further heteroatoms from the group consisting of O, S or N(C₁-C₄-alkyl).

7. The compound as claimed in claim 6, **characterized in that** R₅ and R₆ are each methyl, ethyl, the isomers of propyl and butyl, phenyl, benzyl, cyclohexyl or R₅ and R₆ together are tetramethylene, pentamethylene or 3-oxapentylene, which may be unsubstituted or substituted by C₁-C₄-alkyl, C₅-C₆-cycloalkyl, phenyl, benzyl, C₁-C₄-alkoxy, C₁-C₄-alkoxymethyl, C₁-C₄-alkoxyethyl, (C₁-C₄-alkyl)₂N-, (C₁-C₄-alkyl)₂N-methyl and (C₁-C₄-alkyl)₂N-ethyl.

8. The compound as claimed in claim 1, **characterized in that** the substituents R₁ and R₂ are present once (m is 1 and n is 0), each present once (m and n are each 1), present twice (either m or n is 2) or present three times (m is 2 and n is 1) on the cyclopentadienyl ring or rings.

9. The compound as claimed in claim 1, **characterized in that** the positions of the substituents R₁ and R₂ are the 3, 3', 5 and 5' positions and preferred substitution patterns are the 3 position, the 3 and 3' positions, the 5 position and the 5 and 5' positions.

10. The compound as claimed in claim 1, **characterized in that** the substituents R₁ and R₂ are selected from among C₁-C₄-alkyl, substituted or unsubstituted phenyl, tri(C₁-C₄-alkyl)Si, triphenylsilyl, halogen, -SR₀₆, -CH₂OH, -CHR₀₆OH, -CR₀₆R'₀₆OH, -CH₂O-R₀₆, -CH(O), -CO₂H, -CO₂R₀₆ and -P(O)(R₀₃)₂, where R₀₆ is a hydrocarbon radical having from 1 to 10 carbon atoms and R'₀₆0 independently has one of the meanings of R'₀₆, and where R₀₃ is hydrogen, C₁-C₈-alkyl, C₅-C₆-cycloalkyl, phenyl or benzyl.

11. A compound of the formula IV 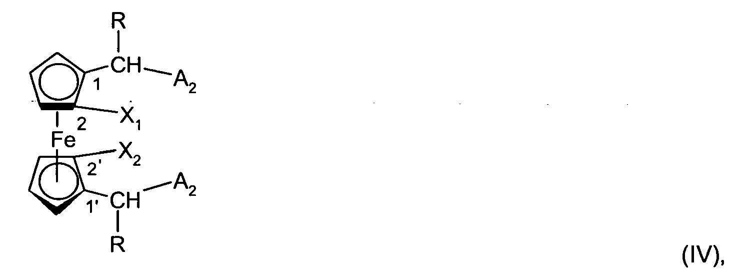 where R is hydrogen or unsubstituted or F-, Cl-, OH-, C₁-C₄-alkyl- or C₁-C₄-alkoxy-substituted C₁-C₈-alkyl, C₃-C₈-cycloalkyl, C₆-C₁₀-aryl or C₁-C₁₁-aralkyl; A₂ is open-chain or cyclic sec-amino having at least one asymmetric carbon atom; and X₁ and X₂ are independently from one another a secondary phosphine group.

12. A complex of a metal selected from the group of TM8 metals, preferably Cu, Ag, Au, Ni, Co, Rh, Pd, Ir, Ru and Pt, with one of the compounds of the formulas I or I' according to claim 1 or a compound of formula IV according to claim 11 as ligands.

13. The metal complex as claimed in claim 12 which corresponds to one of the formulae XII and XIII,
A₃MeLᵣ (XII),
(A₃MeLᵣ)^{(z+)}(E⁻)_{z} (XIII),
where A₃ is one of the compounds of the formula I or I' or IV,
L represents identical or different monodentate, anionic or nonionic ligands or L represents identical or different bidentate, anionic or nonionic ligands;
r is 2, 3 or 4 when L is a monodentate ligand or n is 1 or 2 when L is a bidentate ligand;
z is 1, 2 or 3;
Me is a metal selected from the group consisting of Rh, Ir and Ru; with the metal having the oxidation states 0, 1, 2, 3 or 4;
E- is the anion of an oxo acid or complex acid; and
the anionic ligands balance the charge of the oxidation states 1, 2, 3 or 4 of the metal.

14. The metal complex as claimed in claim 12 which corresponds to the formula XVI,
[RuₐH_{b}Z_{c}(A₃)_{d}Lₑ]_{f}(E^{k})_{g}(S)ₕ (XVI),
where
Z is Cl, Br or I; A₃ is a compound of the formula I or I' or IV; L represents identical or different ligands; E⁻ is the anion of an oxo acid, mineral acid or complex acid; S is a solvent capable of coordination as ligand; and a is from 1 to 3, b is from 0 to 4, c is from 0 to 6, d is from 1 to 3, e is from 0 to 4, f is from 1 to 3, g is from 1 to 4, h is from 0 to 6 and k is from 1 to 4, with the overall complex being uncharged.

15. The use of the metal complexes as claimed in claim 12 as homogeneous catalysts for preparing chiral organic compounds, preferably for the asymmetric addition of hydrogen onto a carbon-carbon or carbon-heteroatom double bond in prochiral organic compounds.

16. A process for preparing chiral organic compounds by asymmetric addition of hydrogen onto a carbon-carbon or carbon-heteroatom double bond in prochiral organic compounds in the presence of a catalyst, **characterized in that** the addition reaction is carried out in the presence of catalytic amounts of at least one metal complex as claimed in claim 12.

## Revendications

1. Composés de formule I ou I' sous la forme de mélanges racémiques, de mélanges de stéréoisomères ou de stéréoisomères optiquement purs, 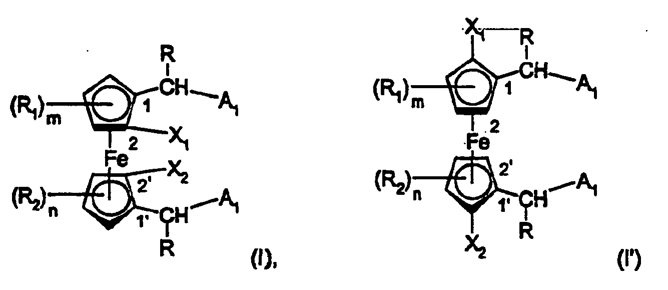 dans lesquels
R représente un hydrogène, ou un alkyle en C₁ à C₈, cycloalkyle en C₃ à C₈, aryle en C₆ à C₁₀ ou aralkyle en C₇ à C₁₁ non substitué ou substitué par F, Cl, OH, un alkyle en C₁ à C₄ ou alcoxy en C₁ à C₄ ;
X₁ et X₂ indépendamment l'un de l'autre représentent un groupe phosphine secondaire ;
A₁ représente un groupe amino ; ou
A₁ représente un radical -OR₃, dans lequel R₃ représente un hydrogène ou un alkyle en C₁ à C₁₈, cycloalkyle en C₃ à C₈, aryle en C₆ à C₁₀, aralkyle en C₇ à C₁₁ ou acyle en C₁ à C₁₈ non substitué ou substitué par F, alkyle en C₁ à C₄, alcoxy en C₁ à C₄, phényle ou -N (alkyle en C₁ à C₄)₂ ;
R₁ et R₂ représentent indépendamment l*'*un de l*'*autre un atome d'halogène ou un substituant lié aux cycles cyclopentadiényle via un atome C, un atome N, un atome S, un atome Si, un groupe P(O) ou P(S) ;
m représente un nombre de 1 à 3, et
n représente 0 ou un nombre de 1 à 3.

2. Composés selon la revendication 1, **caractérisés en ce que** R représente un hydrogène, méthyle, éthyle, cyclohexyle, benzyle ou phényle.

3. Composés selon la revendication 1, **caractérisés en ce que** les groupes phosphine secondaires X₁ et X₂ contiennent deux radicaux hydrocarbonés identiques ou
différents et **en ce que** les groupes phosphine secondaires X₁ et X₂ sont identiques ou différents.

4. Composés selon la revendication 1, **caractérisés en ce que** X₁ et X₂ identiques ou différents représentent une phosphine secondaire non cyclique, choisie dans le groupe -P(alkyle en C₁ à C₆)₂, -P(cycloalkyle en C₅ à C₈)₂, -P(bicycloalkyle en C₇ à C₈)₂, -P(o-furyle)₂, -P(C₆H₅)₂, -P[2-(alkyle en C₁ à C₁₂)C₆H₄]₂, -P[3-(alkyle en C₁ à C₆)C₆H₄]₂, -P[4-(alkyle en C₁ à C₆)C₆H₄]₂, -P[2-(alcoxy en C₁ à C₆)C₆H₄]₂, -P[3-(alcoxy en C₁ à C₆)C₆H₄]₂, -P[4-(alcoxy en C₁ à C₆)C₆H₄]₂, -P[2-(trifluorométhyle)C₆H₄]₂, -P[3-(trifluorométhyle)-C₆H₄]₂, -P [4- (trifluorométhyle) C₆H₄]₂, -P[3,5-bis (trifluorométhyle) C₆H₃]₂, -P[3,5-bis(alkyle en C₁ à C₆)₂C₆H₃]₂, -P[3,5-bis(alcoxy en C₁ à C₆)₂C₆H₃]₂, -P[3,4,5-tris(alcoxy en C₁ à C₆) ₂C₆H₃]₂, et -P[3,5-bis (alkyle en C₁ à C₆) ₂C₆H₃]₂, -P[3,5-bis(alcoxy en C₁ à C₆)₂C₆H₃]₂, -P [3, 4, 5-tris (alcoxy en C₁ à C₆)₂C₆H₃]₂, et -P[3,5-bis(alkyle en C₁ à C₆)₂-4-(alcoxy en C₁ à C₆) C₆H₂] ₂, ou phosphine cyclique, choisie dans le groupe 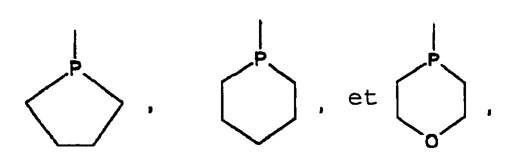 qui sont non substitués ou une ou plusieurs fois substitués avec un alkyle en C₁ à C₄, alcoxy en C₁ à C₄, (alcoxy en C₁ à C₄) - (alkyle en C₁ à C₂), phényle, benzyle, benzyloxy, alkylidène en C₁ à C₄-dioxy ou méthylènedioxy éventuellement substitué par un phényle.

5. Composés selon la revendication 1, **caractérisés en ce que** X₁ et X₂ sont -P(CH₃)₂, -P(i-C₃H₇)₂, -P(n-C₄H₉)₂, -P(i-C₄H₉)₂, -P(C₈H₁₁)₂, -P(norbornyle)₂, -P(o-furyle)₂, - P(C₆H₅)₂, -P [2- (méthyle)C₆H₄]₂, -P [3-(méthyle) C₆H₄]₂, -P [4- (méthyle) C₆H₄]₂, -P [2-(méthoxy) C₆H₄]₂, -P[3-(méthoxy)C₆H₄]₂, -P[4-(méthoxy) C₆H₄]₂, -P [3-(trifluorométhyle) C₆H₄]₂, -P[4-(trifluorométhyle) C₆H₄]₂, -P [3,5-bis (trifluorométhyle) C₆H₃]₂, -P [3, 5-bis (méthyle) C₆H₃]₂, -P[3,5-bis(méthoxy)C₆H₃]₂, -P[3,4,5-tri(méthoxy)C₆H₂]₂, -P[3,5-bis(méthyl)₂-4-(méthoxy)C₆H₂]₂, et ceux des formules 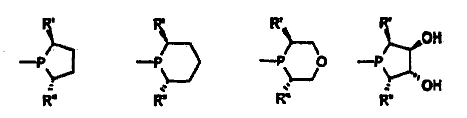 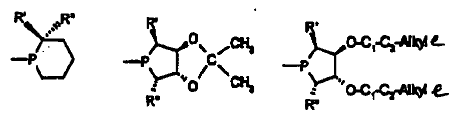 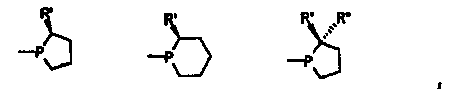 dans lesquelles
R' représente un méthyle, éthyle, méthoxy, éthoxy, phénoxy, benzyloxy, méthoxyméthyle, éthoxy-méthyle ou benzyloxyméthyle et R" a la même signification que R'.

6. Composés selon la revendication 1, **caractérisés en ce que** A₁ est -NH₂, -NHR₅ ou -NR₅R₆, dans lesquels R₅ et R₆ représentent indépendamment l'un de l'autre des radicaux hydrocarbonés aliphatiques, cycloaliphatiques ou aromatiques éventuellement substitués ou R₅ et R₆ forment ensemble avec l'atome N un cycle N-hétérocyclique, qui peut contenir d'autres hétéroatomes du groupe O, S ou N (alkyle en C₁ à C₄).

7. Compositions selon la revendication 6, **caractérisées en ce que** R₅ et R₆ représentent un méthyle, éthyle, des isomères de propyle et de butyle, un phényle, benzyle, cyclohexyle ou R₅ et R₆ représentent ensemble le tétraméthylène, le pentaméthylène ou le 3-oxapentylène, qui sont non substitués ou substitués avec un alkyle en C₁ à C₄, cycloalkyle en C₅ à C₆, phényle, benzyle, alcoxy en C₁ à C₄, alcoxyméthyle en C₁ à C₄, alcoxyéthyle en C₁ à C₄, (alkyle en C₁ à C₄)₂N-, (alkyle en C₁ à C₄)₂N-, (alkyle en C₁ à C₄)₂N-méthyle et (alkyle en C₁ à C₄)₂N-éthyle.

8. Composés selon la revendication 1, **caractérisés en ce que** les substituants R₁ et R₂ sont liés une fois (m est 1 et n est 0), respectivement une fois (m et n sont 1), deux fois (m ou n est 2) ou trois fois (m est 2 et n est 1) dans le cycle cyclopentadiényle ou les cycles cyclopentadiényles.

9. Composés selon la revendication 1, **caractérisés en ce que** les positions pour les substituants R₁ et R₂ sont les positions 3, 3', 5 et 5' et des échantillons de substitutions préférés sont la position 3, les positions 3 et 3', la position 5 et les positions 5 et 5'.

10. Composés selon la revendication 1, **caractérisés en ce que** les substituants R₁ et R₂ sont choisis parmi un alkyle en C₁ à C₄, un phényle éventuellement substitué, un tri (alkyle en C₁ à C₄) Si, un triphénylsilyle, un halogène, -SR₀₆, -CH₂OH, -CHR₀₆OH, - CR₀₆R'₀₆OH, -CH₂O-R₀₆, -CH(O), -CO₂H, -CO₂R₀₆ et -P(O)(R₀₃)₂, dans lesquels R₀₆ représente un radical hydrocarboné avec 1 à 10 atomes de carbone et R'₀₆O a indépendamment la même signification que R'₀₆ et dans lesquels R₀₃ représente un hydrogène, un alkyle en C₁ à C₈, cycloalkyle en C₅ à C₆, phényle ou benzyle.

11. Composés de formule IV 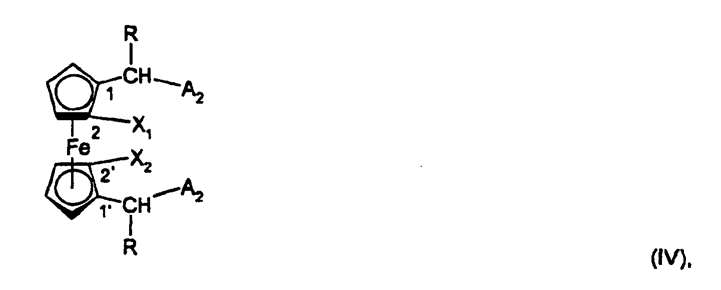 dans laquelle R représente un hydrogène, ou un alkyle en C₁ à C₈, cycloalkyle en C₃ à C₈, aryle en C₆ à C₁₀ ou aralkyle en C₇ à C₁₁ non substitué ou substitué par F, Cl, OH, un alkyle en C₁ à C₄ ou alcoxy en C₁ à C₄ ; A₂ représente un amino secondaire à chaîne ouverte ou cyclique avec au moins un atome de carbone asymétrique, et X₁ et X₂ indépendamment représentent un groupe phosphine secondaire.

12. Complexes métalliques de métaux choisis dans le groupe des métaux TM8, de préférence Cu, Ag, Au, Ni, Co, Rh, Pd, Ir, Ru et Pt, avec un composé de formule I ou I' selon la revendication 1, ou de formule IV selon la revendication 11, comme ligands.

13. Complexes métalliques selon la revendication 12, qui correspondent aux formules XII et XIII,
A₃MeLᵣ (XII),
(A₃MeLᵣ) ^{(z+)} (E⁻)_{z} (XIII),
dans lesquelles A₃ représente un des composés des formules I ou I' ou IV,
L représente des ligands monocoordinés identiques ou différents, anioniques ou non ioniques, ou L représente des ligands bicoordinés identiques ou différents, anioniques ou non ioniques ;
r représente 2, 3 ou 4, lorsque L représente un ligand monocoordiné, ou n représente 1 ou 2, lorsque L représente un ligand bicoordiné ;
z représente 1, 2 ou 3 ;
Me représente un métal choisi dans le groupe Rh, Ir et Ru ; le métal présentant les degrés d'oxydation 0, 1, 2, 3 ou 4 ;
E⁻ est l'anion d'un oxyacide ou d'un acide complexe ; et
les ligands anioniques compensent la charge des degrés d'oxydation 1, 2, 3 ou 4 du métal.

14. Complexes métalliques selon la revendication 12, qui correspondent à la formule XVI,
[RuₐH_{b}Z_{c}(A₃)_{d}Lₑ]_{f} (E^{k})_{g}(S)ₕ (XVI),
dans laquelle
Z représente Cl, Br ou I ; A₃ représente un composé de formule I ou I' ou IV ; L représente des ligands identiques ou différents, E⁻ est l'anion d'un oxyacide, d'un acide minéral ou un acide complexe ; S représente un solvant coordinant comme ligand ; et a représente 1 à 3, b 0 à 4, c 0 à 6, d 1 à 3, e 0 à 4, f 1 à 3, g 1 à 4, h 0 à 6 et k 1 à 4, la charge globale du complexe étant neutre.

15. Utilisation des complexes métalliques selon la revendication 12 comme catalyseurs homogènes pour la préparation de composés organiques chiraux, de préférence pour l'addition asymétrique d'hydrogène à des composés organiques chiraux, de préférence à l'addition asymétrique d'hydrogène à une double liaison carbone-carbone ou une double liaison hétéroatome-carbone dans des composés organiques prochiraux.

16. Procédé pour la préparation de composés organiques chiraux par addition asymétrique d'un hydrogène à une liaison carbone ou une double liaison hétéroatome-carbone à des composés organiques prochiraux en présence d'un catalyseur, **caractérisé en ce qu'**on effectue l'addition en présence de quantités catalytiques d'au moins un complexe métallique selon la revendication 12.
